# EUROPEAN PATENT APPLICATION

(11) **EP 1 862 253 A1**
(43) Date of publication of application: **05.12.2007**
(21) Application number: 06728696.3
(22) Date of filing: 07.03.2006
(51) Int. Cl.: B23Q 1/00, B23Q 11/00

(54) **MACHINE TOOL**

(30) Priority: 18.03.2005 JP 2005079858; 02.11.2005 JP 2005319705
(71) Applicant: Horkos Corp, Fukuyama-shi, Hiroshima-ken 720-0831 (JP)
(72) Inventor: KAI, Hisahiro, c/o HORKOS CORP, Fukuyama-shi, Hiroshima 7200831 (JP)
(74) Representative: Kramer - Barske - Schmidtchen
(86) International application number: PCT/JP2006/304327
(87) International publication number: WO 2006/100898

(57) **Abstract**

A machine tool, wherein the front face 1c of a base 100 is formed in a single of the machine tool and a jig for fixing a work w worked with a tool T is installed in the state of being forwardly extended from a vertical intermediate front part 100B of the base forming an area between the pair of right and left lateral end front parts 100A of the base having the vertical overall length portions or the vertical roughly overall length portions at right and left end parts of the front face 1c formed in the single plane is formed detachably from the other portions of the base 100. The jig 28 for fixing the work w worked with the tool T may be installed in the state of being extended from the vertical intermediate position of the front face 1c in a forward direction Y1

## Description

### FIELD OF THE INVENTION

The invention relates to a machine tool (machining center) comprising a base fixed on a floor, a machining head having a vertically rotating shaft with a tool to the bottom and a guide-driving means formed on the top face of the base. The guide-driving means displaces the machining head in a longitudinal direction, in a lateral direction or in a vertical direction through guide parts.

### BACKGROUND OF THE INVENTION

The background of the first invention will be explained below.
There has been already a machine tool as disclosed in patent document 1. The machine tool is provided with a pair of right and left comparative large side plane walls which are forwardly extended right and left end parts of the front face of a machine bed (a base). A jig for supporting a work is provided between the side plane walls. The front lower part of the machine bed is forwardly extended to reach below the jig. And a chip discharging means is formed on the top face of the front lower part.

The background of the second and the third inventions will be explained.
The machine tool disclosed in patent document 1 is formed in the following configuration in addition to the above-mentioned structure. That is, a machining head is forwardly extended from the base through the upside of the base to be arranged right above the jig.

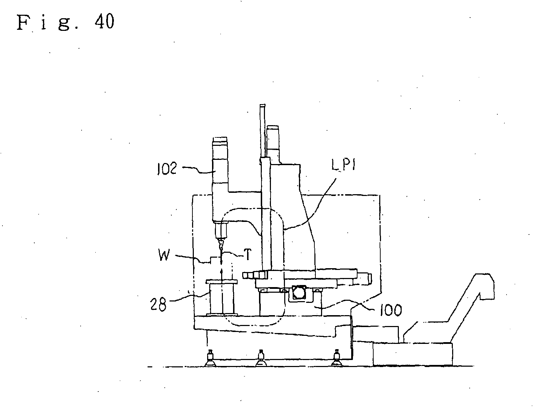

A machine tool shown in Fig. 40 has been conventionally used. The front lower part of a base 100 is forwardly extended to reach below a jig 28 for supporting a work w. A machining head 102 is forwardly extended from the base 100 through the upside of the base to be located right above the jig 28. Besides, a chip discharging means is formed on the top face of the front lower part of the base 100. Such a configuration is in accord with the machine tool disclosed in patent document 1.
Parent document 1: Japanese patent official gazette No. 2968938

### SUMMARY OF THE INVENTION

### PROBLEMS TO BE SOLVED BY THE INVENTION

In the conventional vertical machining center or machine tool, there are some problems, for example, a pair of right and left side plane walls restrict lateral movement of the work right above the jig to make difficult to simply and rapidly carry the work in and out the jig as well as lateral movement of the machining head to prevent the work machining range from expanding in the lateral direction. Besides, because chips of high temperature accumulate on the front lower part of the base, machining precision of the work is apt to be lost because of their heat. Moreover, the front lower part of the base restricts the work machining range in a vertical direction, reducing establishment flexibility in the chip discharging means.
The object of the first invention is to provide a vertical machining center and a machine tool that can settle such problems.

In addition to the above-mentioned problems, in the machine tool, the force for the tool in machining the work is transmitted through a tool T, the machining head 102, the base 100, the jig 28 and the work w so as to draw a loop line LP1, as shown in Fig. 40. The transmission distance is comparative long, so that the rigidity of the whole machine is deteriorated and the machining precision is damaged when the force for the tool T is large.

The applicant has already suggested Japanese patent application No. 2005-79858 as a machine tool that can settle such problems.
In Japanese patent application No. 2005-79858, when making a longitudinal distance between the jig and the front face of the base larger than a fixed standard, the rigidity around the base and the jig is deteriorated to prevent from precise machining. Therefore, the longitudinal distance is made smaller than the fixed standard. However, in this case, since size of a sluing radius around a lateral directional line of the jig or the work fixed on the jig is restricted in conjunction with the fixed standard, size of a work to be machined by the slue is restricted in conjunction with the size of the sluing radius.

The second invention and the third invention are achieved in view of such circumferences. The object is to provide a machine tool for easing the restriction against the size of the work in which the precise machining is done as maintaining the advantages of the machine tool described in Japanese Patent Laid-open application No. 2005-79858.

### MEANS TO SOLVE THE PROBLEM

To achieve the object of the first invention, a machine tool is constructed as follows. That is, the machine tool comprises a base fixed on a floor, a machining head having a vertically rotating shaft on whose bottom part a tool is fixed, and a guide-driving means formed on the top face of the base to displace the machining head in a longitudinal direction, in a lateral direction or in a vertical direction through guide parts, wherein the front face of the base is formed in a single plane orthogonal to the longitudinal direction and a jig for fixing a work machined with the tool is installed in the state of being forwardly extended from a vertical intermediate position of the single plane. Here, the top face of the base is level for the floor, and the front face is vertical to the floor.

According to this invention, there are no members for constructing vertical machining center at right and left portions of the jig of the front face of the base, thereby securing a lateral range of working area of the machining head comparatively widely as well as moving the work in the lateral direction in the neighborhood right above the jig. Therefore, the work is easily and quickly carried in and out from the jig.

Besides, since the chips of high temperature do not accumulate on the base, the heat of the chips is hardly transmitted to the base to keep the machining precision of the work well. Further, since the base is not under the jig, the vertical machining range for work of the machining head is not restricted by the base and the establishment flexibility of a chip conveyer as a chip discharging means can be improved.

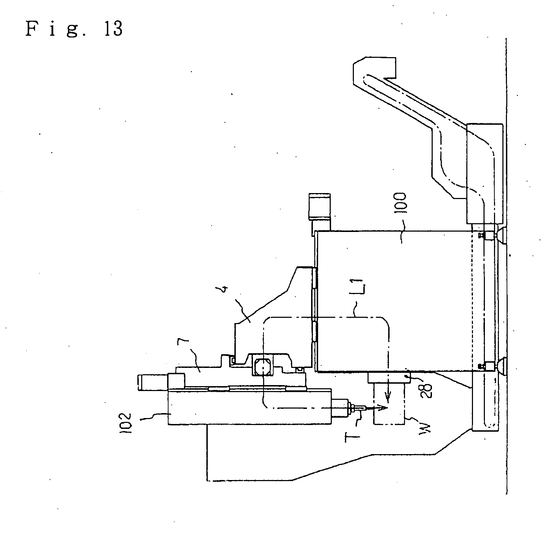

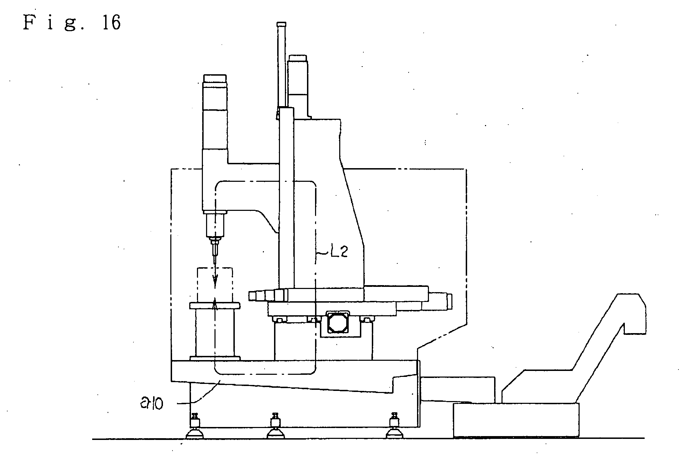

The force for the tool is transmitted through the machining head, the guide-driving means, the base, the jig and the work so as to draw a loop-line L1 (see Fig. 13) while machining the work. The transmission distance of the force is comparatively short because the jig is provided so as to forwardly extend from a vertical intermediate position of the single plane forming in the front face of the base. Therefore, the rigidity of the vertical machining center against the force is increased, and the machining precision of the work can be improved. In the conventional vertical machine tool in Fig. 16, the force during machining is transmitted as drawing a loop-line L2 illustrated in the figure because the jig is fixed on the top face of the bed. In comparing two loop-lines L1, L2, the loop-line L1 is shortened because of lack of passing through the bed 10a, and the rigidity against the force in machining is improved. In this case, since the quantity of bend of the machine tool against the force arising in machining is in proportion to a cube of the loop-line length, thereby effectively increasing the rigidity due to shortening the loop-line length.

The first invention can be put into concrete as follows.
That is; the jig is so formed that the height can be changed on the single plane. According to this, the vertical dimensions in the machining range for work of the jig can be changed in a comparative large range.

Besides, the machining head is vertically displaced in front of the single plane while the work is machined, and the work machining is done at a lower position than the guide part of the guide-driving means. According to this, the chips from the machining head drop smoothly without arriving at the guide-driving means through the front face of the base, and the guide-driving means stably keeps good work without being obstructed by the chips.

Moreover, the top face of the base is raised more than about 1.0m - 1.5m from the floor. According to this, a worker of an adult can move the work on the jig by manual labor with standing posture, and maintain the guide-driving means on the base without bending the body.

Furthermore, a concavity groove is formed to the bottom face of the base, and the chip conveyer for discharging the chips from the front lower part of the base to the rearward thereof is arranged therein. According to this, the chip conveyer can be provided to the lower position in the state that heat is hard to be transmitted. Besides, it can be provided in the state of contacting on the floor, if necessary. Accordingly, the flexibility for installing the chip conveyer comes to be improved.

Besides, the chip conveyer is installed on the floor, and a chip entrance of the conveyer is arranged under the jig. According to this, the height of the jig can be lowered without being affected by the base, and the heat of the chips is hard to be transmitted to the base. The chips produced during machining can be carried out to the other place easily and quickly.

Moreover, a table for supportively rotating and displacing the work is provided to the front face of the base to form the jig. According to this, a machining position for the work can be conveniently changed by rotating and displacing the table.

Furthermore, the device for driving the jig is surrounded by a cover, thereby fluid-tightly distinguishing the inside of the cover from the machining area for work due to the machining head. According to this, coolant and chips can be prevented from splashing and adhering to the driving device.

To achieve the object of the second invention, a machine tool of the second invention is formed as follows. That is, the machine tool comprises a base fixed on a floor, a machining head having a vertically rotating shaft on whose bottom part a tool is fixed, and a guide-driving means formed on the top face of the base to displace the machining head in a longitudinal direction, in a lateral direction or in a vertical direction through guide parts, wherein almost the whole front face of the base is formed in a single plane orthogonal to the longitudinal direction, a lateral intermediate front part of the base forming an area between a pair of right and left lateral end front parts of the base having the vertical overall length portions or the vertical roughly overall length portions at right and left end parts of the front face is formed detachably from the other portions of the base, and a jig for fixing a work machined by the tool is installed in the state of being forwardly extended from a vertical intermediate position of the front face. Here, the top face of the base is level for the floor, and the front face is vertical to the floor.

According to the second invention, there are no members for constructing vertical machining center on the jig of the front face of the base and the right and left portions of the work fixed to the jig, thereby securing lateral range of machining area due to the machining head comparatively widely as well as moving the work in the lateral direction in the neighborhood right above the jig. Therefore, the work is easily and quickly carried in and out from the jig.

Besides, since the chips of high temperature do not accumulate on the base, the heat of the chips is hard to be transmitted to the base, thereby keeping the machining precision of the work well. Further, since the base is not under the jig, the vertical machining area for work due to the machining head is not restricted by the base, thereby improving the flexibility for installing a chip conveyer as a chip discharging means.

Moreover, the force for the tool is transmitted through the machining head, the guide-driving means, the base, the jig and the work so as to draw a loop-line during machining. The transmission distance of the force is comparatively short because the jig is provided so as to forwardly extend from the vertical intermediate position of the single plane forming the front face of the base. Therefore, the rigidity of the vertical machining center against the force is increased, thereby improving the machining precision of the work.

Furthermore, since a concave part is formed to the front face by separating and removing the lateral intermediate front part from the other base part, the sluing radius of the jig or the work fixed thereon is increased in relation to the longitudinal length of the lateral end front parts of the base (the longitudinal length of the lateral intermediate front part). In this case, the lateral end front parts of the base include the vertical overall length portions or the vertical roughly overall length portions at the right and left end parts of the front face of the base, and the lateral length and the longitudinal length are formed in specified sizes, respectively. Therefore, the sluing of the jig or the work fixed thereon without extending the transmission distance of the force during machining, besides, without deteriorating the rigidity of the base in comparison with Japanese patent application No. 2005-79858. The limitation of the upper limit size of a work for performing precise machining can be effectively lightened.

The jig can be fixed on the front face of the lateral intermediate front part of the base in the state that the separated and removed front part is installed on its original position, so that it can function like that of Japanese patent application No. 2005-79858.

To achieve the object of the third invention, a machine tool of the third invention is formed as follows. That is, the machine tool comprises a base fixed on a floor, a machining head having a vertically rotating shaft on whose bottom part a tool is fixed, and a guide-driving means formed on the top face of the base to displace the machining head in a longitudinal direction, in a lateral direction or in a vertical direction through guide parts, wherein almost the whole front face of the base is formed in a single plane orthogonal to the longitudinal direction, the lateral intermediate front part of the base forming an area between a pair of right and left lateral end front parts of the base having the vertical overall length portions or the vertical roughly overall length portions at right and left end parts of the front face is excised, and a jig for fixing a work machined by the tool is installed in the state of being forwardly extended from a vertical intermediate position of the front face. Here, the top face of the base is level for the floor, and the front face is vertical to the floor.

According to the third invention, the machine tool is the same form as one that the lateral intermediate front part of the base is taken away from the machine tool related to the second invention, and therefore, the same effect as the second invention can be obtained.

The second invention and the third invention can be put into concrete as follows. That is, the longitudinal length of the lateral end front part of the base is made about 100mm - 300mm. According to this, the sluing radius around the lateral line of the jig and the work fixed thereon is made larger by about 100mm - 300mm without deteriorating the rigidity of the base whose longitudinal, lateral and vertical lengths are made 5m - 6m. The sluing radius around the lateral line of the work, which makes precise machining possible, is made larger by about 100mm - 300mm.

The lateral length of the right and left lateral end front part of the base is made than about 100mm. According to this, the sluing radius around the lateral line of the jig and the work fixed thereon is made larger in relation to the longitudinal length of the lateral end front parts of the base without deteriorating the rigidity of the base whose longitudinal, lateral and vertical lengths are made 5m - 6m.

Besides, the jig is formed so as to be forwardly extended from the front face forming the front end face of the pair of right and left lateral end front parts of the base. According to this, the right and left portions of the jig are supported by the front face of the base, thereby stably supporting the work fixed on the jig.

Moreover, the jig is formed so as to be forwardly extended from the front face forming the front end face of the lateral intermediate front part of the base. According to this, the jig is supported by the lateral intermediate front part of the base without going through the lateral end front parts of the base. Therefore, the work can be supported through the jig whose lateral length is comparatively short. Accordingly, the transmission distance of the force during machining is made small to diminish distortion of the jig and the base due to external force during machining as possible, thereby machining precisely.

Furthermore, the jig is arranged between the pair of right and left lateral end front parts of the base rearward the front face. According to this, the machined range of the work fixed on the jig is arranged near and in front of the single plane. Therefore, the transmission distance of the force during machining is made smaller to diminish distortion of the jig and the base due to external force during machining as possible, thereby machining precisely.

### EFFECT OF INVENTION

The machine tool of the invention improves in machining precision of the work due to shortening the length of the loop-line drawn by the force for the tool through the machining head, the guide-driving means, the base, the jig and the work.

### BRIEF DESCRIPTION OF THE DRAWINGS

[Figure 1] Fig.1 is a partially schematic perspective view of a vertical machining center of the first embodiment of the first invention.
[Figure 2] Fig.2 is a side view of the vertical machining center of the first embodiment.
[Figure 3] Fig.3 is a perspective view of a vertical machining center wherein a base and a jig of the fist embodiment are modified.
[Figure 4] Fig.4 is a perspective view of a vertical machining center wherein a base and a jig of the second embodiment of the first invention are modified.
[Figure 5] Fig.5 is a perspective view of a machining center wherein the jig and so on of the first embodiment are modified.
[Figure 6] Fig.6 is a perspective view of a machining center wherein the jig and so on of the first embodiment are modified.
[Figure 7] Fig.7 is a partially schematic perspective view of the vertical machining center of the second embodiment.
[Figure 8] Fig.8 is a perspective view of the vertical machining center of the first embodiment.
[Figure 9] Fig.9 is a perspective view of the vertical machining center of the second embodiment.
[Figure 10] Fig.10 is a perspective view showing a modification of the vertical machining center of the second embodiment.
[Figure 11] Fig.11 is a perspective view of a vertical machining center wherein a table is provided to the jig of the second embodiment.
[Figure 12] Fig. 12 is a perspective view of a vertical machining center wherein a table of a jig is provided to the front face of the base of the first embodiment.
[Figure 13] Fig.13 is a side view showing a transmission course of the force produced during machining in the first embodiment.
[Figure 14] Fig. 14 shows a state that six vertical machining centers are displayed aside. Fig. 14A is a plane view and Fig. 14B is a side view.
[Figure 15] Fig.15 shows an another state that six vertical machining centers are displayed aside. Fig. 15A is a plane view and Fig. 15B is a partially schematic side view.
[Figure 16] Fig. 16 is a side view showing a transmission course of the force produced during machining in the conventional machine tool.
[Figure 17] Fig. 17 is a partially schematic perspective view of the vertical machining center of the third embodiment related to the second invention and the third invention.
[Figure 18] Fig. 18 is a side view of the vertical machining center of the third embodiment.
[Figure 19] Fig. 19 is a perspective view showing the state that a lateral intermediate front part of the base is removed from the vertical machining center in Fig. 17.
[Figure 20] Fig.20 is a perspective view of the vertical machining center wherein a jig shown in Fig. 17 is modified.
[Figure 21] Fig.21 is a perspective view of the vertical machining center wherein the jig of Fig. 17 is modified.
[Figure 22] Fig.22 is a perspective view of the vertical machining center wherein the jig of Fig. 17 is modified.
[Figure 23] Fig.23 is a perspective view showing the state that a hopper part is provided to the vertical machining center of Fig. 17.
[Figure 24] Fig.24 is a perspective view showing the state that a circumference cover is provided to the vertical machining center of Fig.22.
[Figure 25] Fig.25 is a view wherein the vertical machining center is viewed from a diagonal bottom in the state that the jig is abbreviated.
[Figure 26] Fig.26 is a perspective view showing the state that an inside cover is provided to the vertical machining center of Fig.24.
[Figure 27] Fig.27 is a perspective view showing the state that a table is provided to the jig of the vertical machining center of Fig.26.
[Figure 28] Fig.28 is a view for explaining a tool changer and so on of the vertical machining center as viewed from right above.
[Figure 29] Fig.29 is a view for explaining an operation of the tool changer as viewed from a side.
[Figure 30] Fig.30 is a view for explaining the state that the force of the vertical machining center during machining is transmitted.
[Figure 31] Fig.31 is a perspective view of the state that a longitudinal intermediate front part of the base of the vertical machining center of Fig.22 is removed.
[Figure 32] Fig.32 is a side view of the vertical machining center of Fig.31.
[Figure 33] Fig.33 is a perspective view of the state that a longitudinal intermediate front part of the base of the vertical machining center of Fig.23 is removed.
[Figure 34] Fig.34 is a perspective view of the state that a longitudinal intermediate front part of the base of the vertical machining center of Fig.20 is removed.
[Figure 35] Fig.35 is a perspective view of the state that a longitudinal intermediate front part of the base of the vertical machining center of Fig.21 is removed.
[Figure 36] Fig.36 is a perspective view of the state that a longitudinal intermediate front part of the base of the vertical machining center of Fig.27 is removed.
[Figure 37] Fig.37 is a perspective view of a vertical machining center wherein the jig in Fig.33 is modified.
[Figure 38] Fig.38 shows the state that six vertical machining centers are displayed aside. Fig.38A is a plane view and Fig.38B is a side view.
[Figure 39] Fig.39 shows an another state that six vertical machining centers are displayed aside. Fig.39A is a plane view and Fig.39B is a partially schematic side view.
[Figure 40] Fig.40 is a side view showing the transmission course of the force produced during machining in the conventional machine tool.

### EXPLANATION OF REFERENCED NUMERALS

- 100: a base
- 100A: lateral end front parts of the base
- 100B: a lateral intermediate front part of the base
- 101: a guide-driving means
- 102: a machining head
- 1a: a side face of the base 100
- 1b: a side face of the base 100
- 1c: a front face of the base 100
- 1d: a rear face of the base 100
- 1e: a bottom face of the base 100
- 1f: a top face of the base 100
- 2: a supporting member
- 3, 33A.: a tool changer
- 4: the first saddle
- 5: the first guide part
- 6: the first drive part
- 7: the second saddle
- 8: the second guide part
- 9: the second drive part
- 10: the third guide part
- 11: the third drive part
- 12, 22: a guide rail
- 13: a guide block
- 14: the first screw shaft
- 15: the first servo motor
- 16,21: a nut body
- 17a: a bottom guide rail
- 17b: an upper guide rail
- 18: a guide block
- 19: the second screw shaft
- 20: the second servo motor
- 23: a head main body
- 24: the third servo motor
- 26A: a vertical rotation driving shaft
- 27: a spindle motor
- 28: a jig
- 29: a chip conveyer
- 29a: a chip entrance
- 29b: a chip exit
- 29c: an endless carrying belt
- 29d: a casing
- 29e: a tank
- 30: a hopper part
- 31: a circumference cover
- 31a, 31b: a side plane wall of the circumference cover
- 31c: a front plane wall of the circumference cover
- 31d: a vertical plane wall of the circumference cover
- 31e: an accordion horizontal plane wall
- 31g: a sliding wall face
- 31h: an guide rail
- 32a, 32b, 32c: an inside cover
- 33: a receptacle
- 34: a power transportation device
- 34A: a servo motor
- 35: a temporary table for work
- 35A: a drive part
- 36: a disk
- 37: a claw part
- T: a tool
- w: a work
- X: a lateral direction
- Y: a longitudinal direction
- Z: a vertical direction
- a2: a concave groove part
- a3: a front part
- t: a table
- L1: a longitudinal length
- L2: a lateral length
- Y1: the forward

### PREFERRED EMBODIMENT OF THE INVENTION

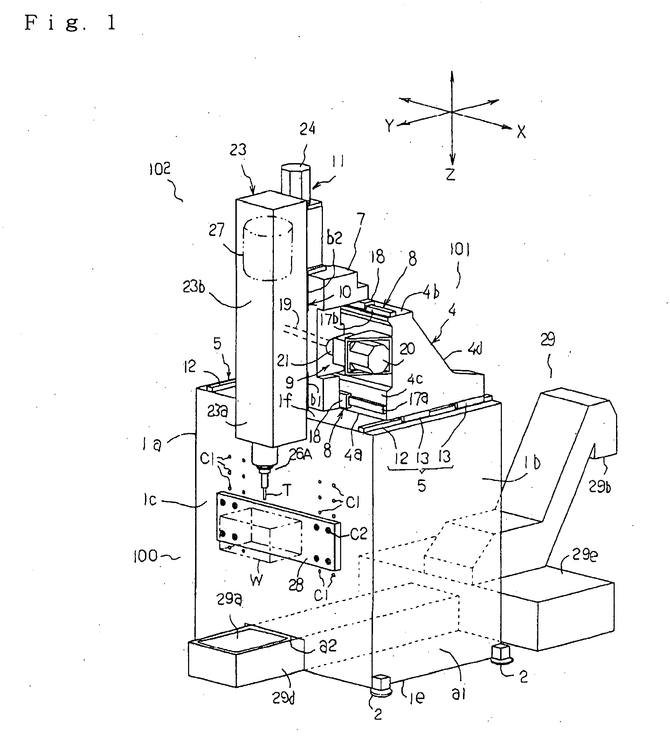

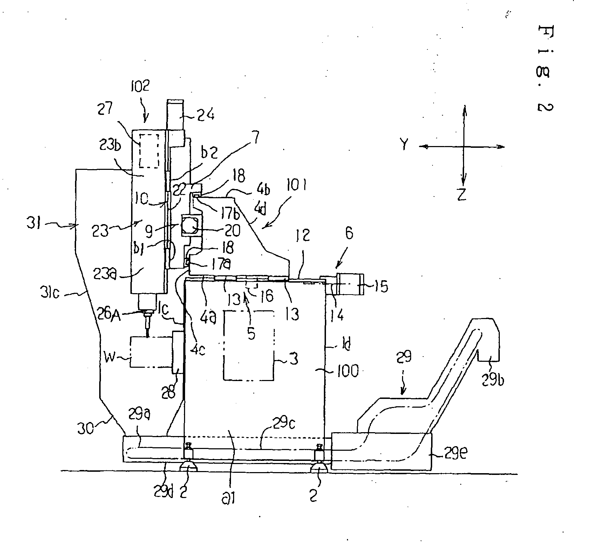

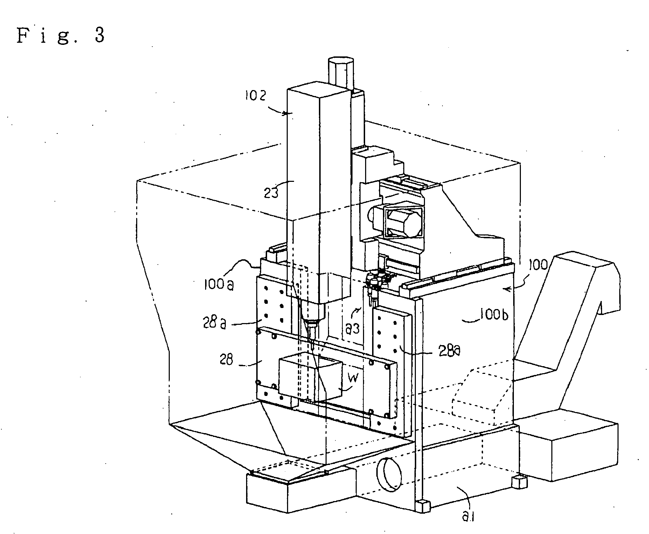

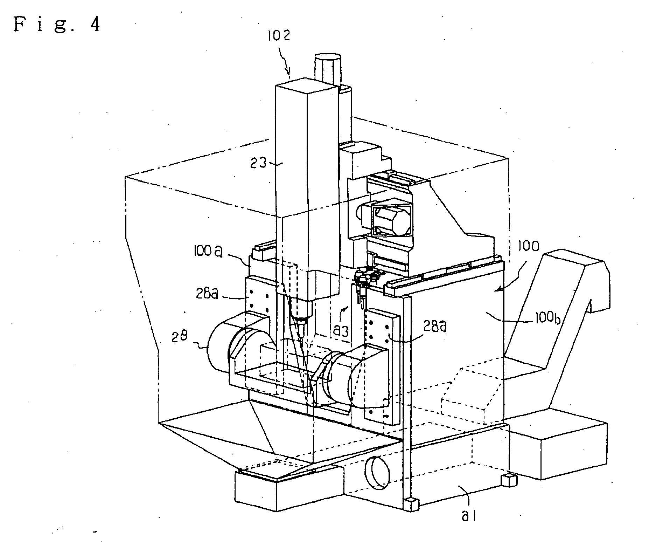

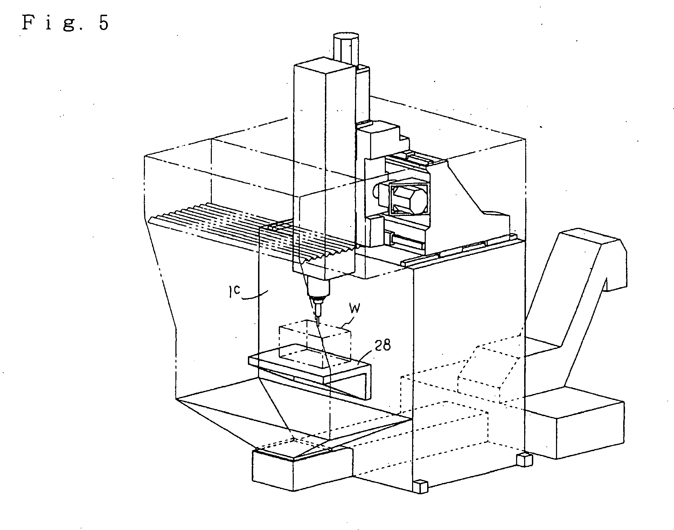

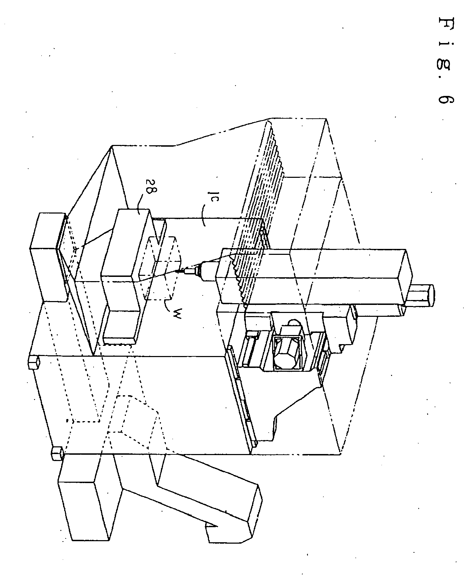

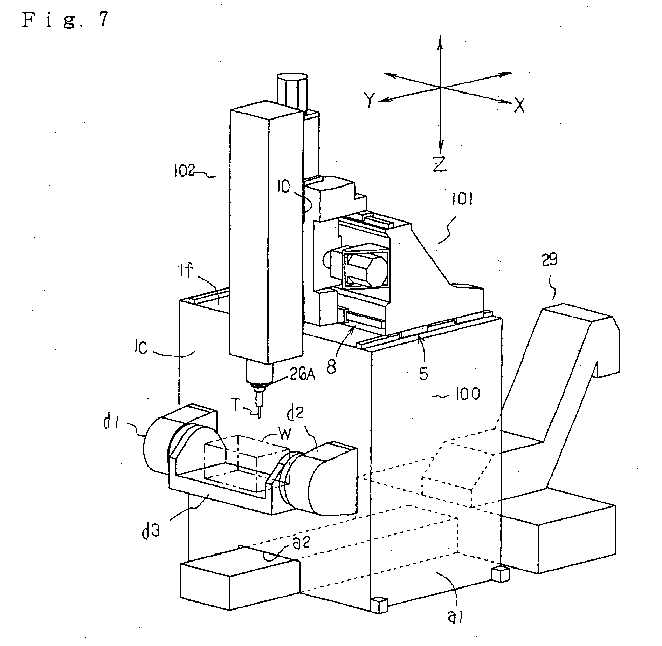

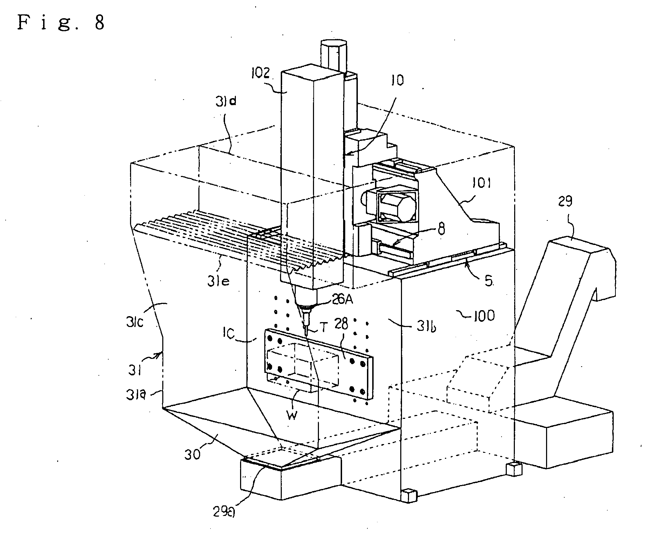

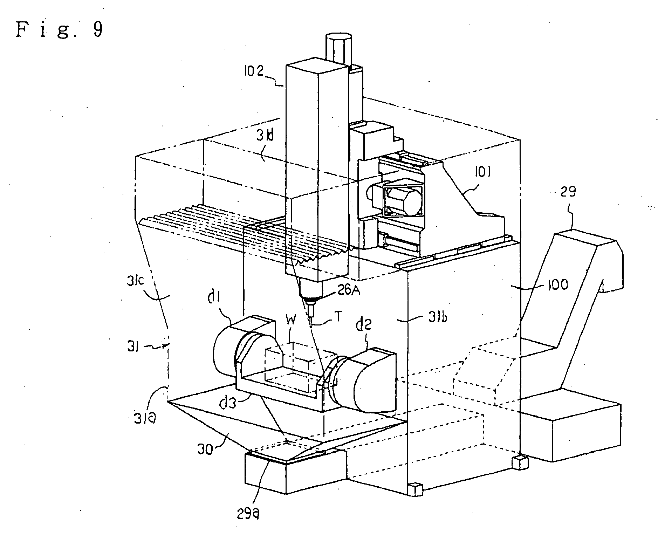

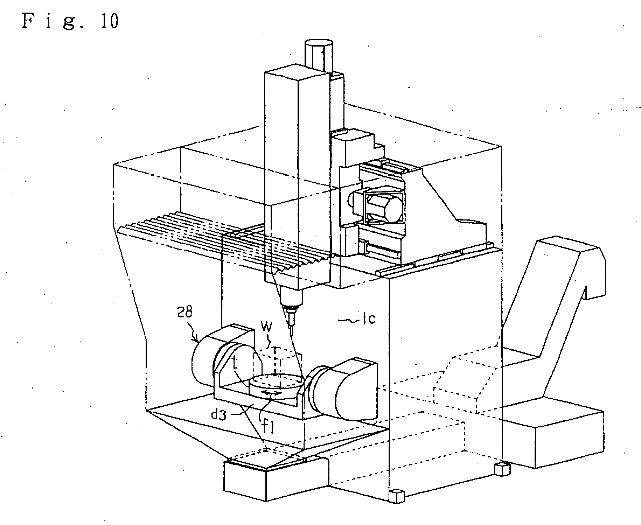

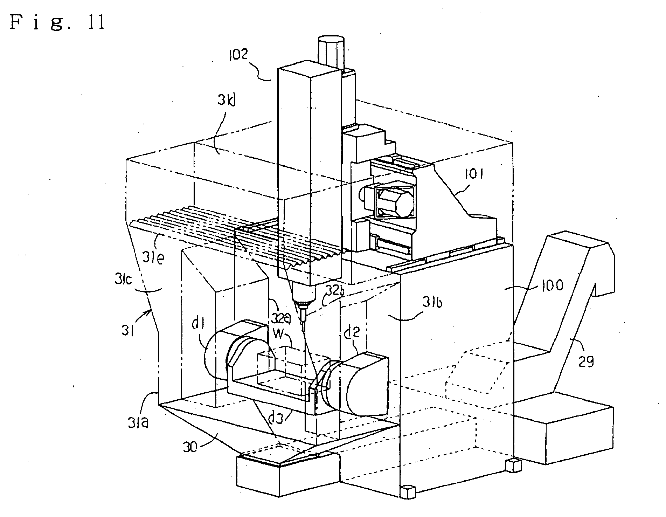

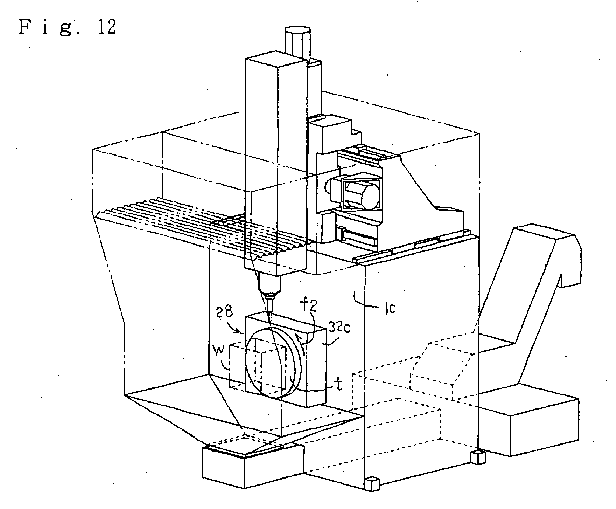

Embodiments of the first invention will be described as follows. Fig.1 to Fig. 13 show a vertical machining center of a machine tool related to the first invention. Fig. 1 is a partially schematic perspective view of a vertical machining center of the first embodiment, Fig.2 is a side view of the vertical machining center of the first embodiment, and Fig.3 is a perspective view of a vertical machining center in which a base and a jig of the fist embodiment are modified. Fig.4 is a perspective view of a vertical machining center wherein a base and a jig of the second embodiment are modified. Fig.5 and Fig.6 are perspective views of a machining center wherein the jig and so on of the first embodiment are modified. Fig.7 is a partially schematic perspective view of the vertical machining center of the second embodiment. Fig.8 is a perspective view of the vertical machining center of the first embodiment, Fig.9 is a perspective view of the vertical machining center of the second embodiment, and Fig. 10 is a perspective view showing a modification of the vertical machining center of the second embodiment. Fig.11 is a perspective view of a vertical machining center which a table is provided to the jig of the second embodiment and Fig. 12 is a perspective view of a vertical machining center wherein a table of a jig is provided to the front face of the base of the first embodiment. Fig. 13 is a side view showing a transmission course of the force produced during machining in the first embodiment.

As shown in Fig.1 and Fig.2, the vertical machining center of the invention comprises a base 100, a guide-driving means 101 and a machining head 102.
The base 100 is stationed on a floor, formed in an almost rectangular solid in which each of right and left side faces 1a, 1b is formed in a single plane orthogonal to a lateral direction (an X-axial) and a front face 1c and the greater part of a rear face 1d are respectively single planes orthogonal to a longitudinal direction (a Y-axial).

A bed a1 is the lower part of the base 100, and is faced to the floor. Supporting members 2 are adjustable in the height, and are provided near four corners of the bottom face 1e of the bed 1a. Besides, a concave groove part a2 extending along the Y-axis direction is formed to the bottom face 1e. The base 100 is box shape, and a tool exchanger 3 is installed to the upper inside thereof.
Besides, the top face, the front face and the rear face of the base 100 can be opened by providing a left part 100a and a right part 100b on the bed a1, as shown in Fig.3 or Fig.4.

The guide-driving means 101 comprises the first saddle 4, the first guide part 5, the first drive part 6, the second saddle 7, the second guide part 8, the second drive part 9, the third guide part 10 and the third drive part 11.
Concretely, the first saddle 4 is a roughly trapezoidal block as viewed from a side, disposed on the top face If of the base 100. The bottom face 4a and the top face 4b are horizontal, the front face 4c is a plane orthogonal to the Y-axis direction, and the rear face 4d is inclined toward rearward bottom in parallel to the X-axis direction. A center in the height of the front face 4c is shaped like a concave as viewed from a side.

The first guide part 5 comprises a pair of guide rails 12 provided to the right and left sides of the top face of the base 100 in a fixed manner and guide blocks 13 provided to the front and back positions of the right and left sides of the bottom face 4a of the first saddle 4. Here, the guide rails 12 are straight along the Y-axis direction, and the guide blocks 13 are free-slidably fitted on a guide rail 12.

The first drive part 6 comprises the first screw shaft 14, the first servo motor 15 for rotatably driving the first screw shaft 14, and a nut body 16 in which the first screw shaft 14 is screwed. The first screw shaft 14 is arranged at the center of the X-axis direction between the top face If of the base 100 and the bottom face 4a of the first saddle 4 along the Y-axis-direction and rotatably held at the specified position of the top face 1f through a bearing. The nut body 16 is fixed on the bottom face of the first saddle 4. The servo motor 15 is rotated by a not-illustrated numerically controlled control device (NC control device) to move the first saddle 4 along the Y-axis direction on the base 100.

The second saddle 7 is a vertical rough rectangular block, disposed nearly to the front face of the first saddle 4, comprising a top part, a bottom part and a central part. The central part connects the top part and the bottom part. The right and left ends of the top part and the bottom part are extended from the central part to the right and left sides a little, and the top part is extended rearward than the central part and the bottom part.

The second guide part 8 comprises a lower guide rail 17a, an upper guide rail 17b and a pair of right and left guide blocks 18. The lower guide rail 17a is straight along the X-axis direction, fixedly provided to the lower portion of the front face 4c of the first saddle 4. The upper guide rail 17b is straight along the X-axis direction, fixedly provided to the front part of the top face 4b of the first saddle 4. The guide blocks 18 are free-slidably fitted on the guide rails 17a, 17b, respectively.

The second drive part 9 comprises the second screw shaft 19, the second servo motor 20 for rotatably driving the second screw shat 19 and a nut body 21 in which the second screw shaft 19 is screwed. The second screw shaft 19 is arranged at the center of the Z-axis direction between the front face 4c of the first saddle 4 and the rear face of second saddle 7 along the X-axis direction, rotatably held at the specific position of the front face 4c of the first saddle 4 through the bearing. The nut body 21 is fixed on the rear face of the second saddle 7. The second servo motor 20 is rotated by the not-illustrated NC control device to move the second saddle 7 along the X-axis direction on the front face 4c of the first saddle 4.

The third guide part 10 comprises a pair of guide rails 22 and guide blocks b1, b2. The guide rails 22 are straight along the Z-axis direction, fixedly provided to right and left sides of a rear face of a head main body 23 comprising an upper head main body 23b and a lower head main body 23a. The guide blocks b1, b2 are fixedly provided to upper and lower positions of right and left sides of the front face of the second saddle 7, free-slidably fitted on the corresponding guide rails, respectively.

The third drive part 11 comprises a not-illustrated third screw shaft, the third servo motor 24 for rotatably driving the third screw shaft, and a not-illustrated nut body in which the third screw shaft is screwed. The third screw shaft is arranged at the center of the X-axis direction between the front face of the second saddle 7 and the rear face of the upper head main body part 23b along the Z-aXis direction, rotatably held at the specific position of the front face of the second saddle 7 through the bearing. The nut body is fixed on the rear face of the upper head main body 23b. The third servo motor 24 is rotated by the not-illustrated NC control device to move the machining head 102 along the Z-axis direction on the front face of the second saddle 7.

The machining head 102 comprises the head main body 23, a vertical rotation driving shaft 26A and a spindle motor 27 for rotating the driving shaft 26A. The driving shaft 26A is rotatably supported to the head main body 23 through the bearing, fixedly having the tool T to the lower end. The spindle motor 27 is fixed to the upper head main body 23b.

In the above-mentioned configuration, a jig 28 is provided to the front face 1c of the base 100 to support a work w fixedly. The jig 28 is a plane board so as to fixedly support the work w through a screw member and so on. A means for optionally changing the height of the jig 28 is formed to the central position of the X-axis direction of the base 100. Concretely, many screw holes c1 are arranged in a row along the Z-axis direction on the front face 1c of the base 100, and the jig 28 is changed to the height corresponding to the screw holes c1 by changing the screw holes c1 in which screw members c2 for fixing the jig 28 are screwed. The jig 28 can be a hook-shaped board as shown in Fig.5 or a rectangular block as shown in Fig.6.

In this case, it is expected that a board member 28a for fixing the jig 28 on the front face of the base as shown in Fig.3 and Fig.4 and a convex-shaped or concave-shaped guide rail for guiding the jig 28 along the Z-axis direction are provided on the front face 1c. Here, the board member 28a forms a part of the jig 28. Different convex-shaped parts are sometimes formed to the front face 1c necessarily. However, as long as the convex-shaped parts are formed so as not to duplicate as viewed from the side within a machining area of a moving range of the tool T while machining the work w fixed on the jig 28, they are not deviated from the configuration of the invention, namely, the front face 1c is formed in a single plane. Besides, forming a concave part a3 to a part of the front face 1c as shown Fig.3 and Fig.4 is not deviated from the configuration of the invention, namely, the front face 1c is formed in a single plane.

The jig 28 can be formed so as to support a work supporting part adjustable in position change through the NC control device. For example, as shown in Fig.7, a simple bearing d2 and a bearing part d1 in which a driving device is built are fixedly provided to right and left portions of the front face 1c of the base 100 in the state of being forwardly extended, a work supporting part d3 is provided between the bearings d1, d2 through a rotation supporting shaft along the X-axis direction, the position around the rotation supporting shaft of the work supporting part d3 may be changed by an order of the NC control device. Instead of this, it may be that right and left inclined postures of the work w fixed on the work supporting part are changed according to an order of the NC control device or the work w fixed on the work supporting part is changed around a specific shaft along the Z-axis direction according to an order of the NC control device. Such a jig 28 can be formed so that the height is adjustable in change, if necessarily. For example, it is exactly that the jig 28 is formed so as to move parallel in the Z-axis direction on the specific line in response to the rotation of the servo motor. Besides, a mechanism for rotary displacement of the work or vertical displacement of the work may be operated by a manual handle or a cylinder drive due to an oil pressure or an air pressure.

A chip conveyer 29 for carrying chips to a specific place is provided under the base 100. The chips are produced when the work w fixed on the jig 28 is cut. The chip conveyer 29 comprises a chip entrance 29a and a chip exit 29b. The chip entrance 29a is arranged right under the jig 28 and the chip exit 29b is arranged at a place suitable for carrying out the chips. The direction that the chip conveyer 29 carries out the chips is suitably decided in response to the on-site situation, sometimes turned to the Y-axis direction as illustrated or the X-axis direction. The chip conveyer 29 is provided with an endless carrying belt 29c that moves the chips in the state of putting on the top face. Circumference of the endless carrying belt 29c is fluid-tightly surrounded by a casing 29d. The inside of the casing 29d is used as a passage for coolant, and a tank 29e for storing the coolant is formed to a longitudinal position of the casing 29d.

In the vertical machining center shown in Fig.1 and Fig.2, generally as shown in Fig.8, a hopper part 30 is formed to the front face 1c of the base 100 below the jig 28. The hopper part 30 receives chips and coolant to drop them into the chip entrance 29a through the bottom opening. The chips are produced when the work w fixed on the jig 28 is cut, and the coolant is fed into the cut portion of the work w. A circumferential cover 31 is provided to surround a front space of the base 100 above the hopper part 30 and an upper space of the base 100. The circumferential cover 31 shown in Fig.8 or Fig.9 comprises right and left side plane walls 31a, 31b, a front plane wall 31c, an X-axially vertical plane wall 31d fixed on the machining head 102, and an accordion-shaped horizontal wall 31e connecting the lower end edge of the vertical plane wall 31d and the upper inside of the front plane wall 31c. Here, the accordion-shaped horizontal wall 31e is extensively deformed along the Y-axis direction. In this case, right and left end edges of the horizontal wall 31e are in close contact with the insides of the right and left side plane walls 31a, 31b, respectively. Switching ports for carrying the work w into or out of the circumferential cover 31 are formed to the front plane wall 31c and the right and left side plane walls 31a, 31b, if necessarily.

As shown in Fig. 10, inside covers 32a, 32b for surrounding the bearing parts d1, d2 are provided in the circumferential cover 31, if necessarily. The inside covers 32a, 32b contribute towards preventing the chips from creeping in relative sliding faces of the bearing parts d1, d2 as well as the coolant from splashing and adhering on the circumference of the bearing parts d1, d2. As shown in Fig.11, a table t rotating toward an arrow direction f1 can be provided on the work supporting part d3, or as shown in Fig. 12, the table t rotating toward an arrow direction f2 can be provided on the front face 1c of the base 100. However, in this case, an inside cover 32c for surrounding a driving device of the table t is provided in the circumferential cover 31 to fluid-tightly interrupt the work machining area and the driving device for the table t with the inside cover 32c. According to this, the driving device for the table t is guarded from the coolant and the chips.

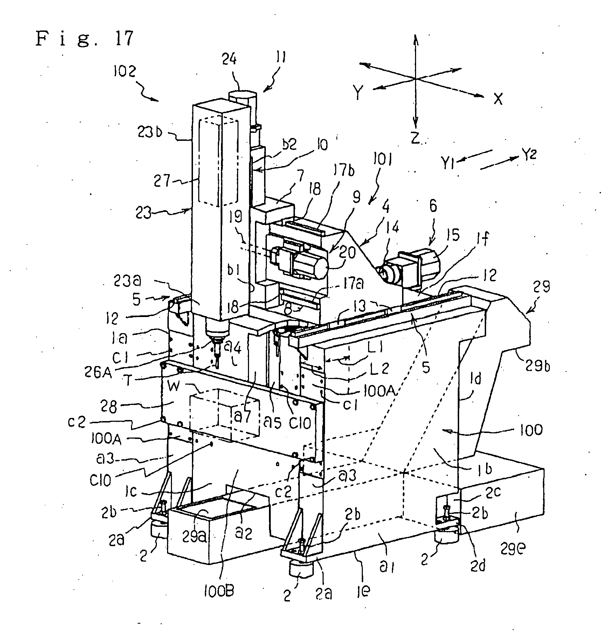

A use example and an operation that the work w is machined by the vertical machining center shown in Fig.8 to Fig. 10 will be explained below.
An operator carries the work w outside the circumferential cover 31 and fixes it on the work supporting part of the jig 28. After machining the work w, the operator removes the work w from the jig 28 and carries it outward the circumferential cover 31. In this case, since the front face 1c of the base 100 is formed in a single plane and the jig 28 is provided to a vertical intermediate position of the single plane, there are no component members of the vertical machining center on the front side and the right and left sides of the jig 28 inside the circumferential cover 31. Therefore, the work w is comparatively easily transmitted on the jig 28 by being displaced from the front side of the jig 28 to the Y-axis direction through a switching entrance of the front plane wall 31c from the outside of the circumferential cover 31, or by being displaced from the right and left sides of the jig 28 to the X-axis direction through the switching entrances of the right and left side plane walls 31a, 31b. Besides, the work w is comparatively easily transmitted outside the circumferential cover 31 by being displaced from the jig 28 to the Y-axis direction through the switching entrance of the front plane wall 31c, or by being displaced to the X-axis direction through the switching entrances of the right and left side plane walls 31a, 31b. Moreover, in each of examples of Fig. 17 to Fig.22, such a configuration as the front face 1c of the base 100 is formed in a single plane and the jig 28 is provided to the vertical intermediate position of the single plane contributes effectually towards making the length of the work w fixed on the jig 28 in the X-axis direction comparatively large.

When a machining area due to the tool T needs to be changed because the size of the work w is changed, in the vertical machining center shown in Fig. 8, the height of the jig 28 is changed by changing the screw hole c1 in which the screw member c2 is screwed. In this case, when the height of the jig 28 from the floor is diminished, a Z-axial distance from the jig 28 to the tool T of the machining head at the initial position is increased, and therefore, the height of the machining area is increased. Conversely, when enlarging the height of the jig 28, the Z-axial distance from the jig 28 to the tool T of the machining head at the initial position is decreased, and therefore, the height of the machining area is decreased.

When machining the work w fixed on the jig 28, the not-illustrated NC control device is started on an operation. That is, the NC control device suitably operates the first servo motor 14, the second servo motor 20 and the third servo motor 24 due to a previous input program to displace the machining head 102 along the Y-axis direction, the X-axis direction and the Z-axis direction, and besides, operates a spindle motor 27 to rotate the vertical rotation driving shaft 26A and the tool T installed thereon. Besides, if necessary, the tool exchanger 3 is operated to exchange the tool T of the machining head 102, and a not-illustrated coolant supply means is suitably operated to supply coolant.

The work w is machined in a predetermined shape with the tool T through the NC control device. During machining, a force for the tool T is transmitted so as to draw a loop-line L1 through the machining head 102, the second saddle 7, the first saddle 4, the base 100, the jig 28 and the work w, as shown in Fig. 13. In this case, when the jig 28 is fixedly provided to the front face 1c of the base 100 in a forward extending manner, the whole rigidity of the machining head 102, the second saddle 7, the first saddle 4, the base 100 and the jig 28s is effectively increased due to shortening the length of the loop-line L1 and the machining precision of the work w is improved.

While machining the work w with the machining head 102, the coolant is supplied from the coolant supply means to smoothly cut the work w and cool the cut place, and on the other hand, the tool T cuts the work w to produce chips. Such coolant and chips drop due to the gravitation as splashing the circumference due to rotation of the tool T. The splashed coolant and chips are prevented from splashing outward by the circumferential cover 31 (the front plane wall 31c, the right and left side plane walls 31a, 31b, the accordion horizontal plane wall 31e and so on) and the base 100 and so on, thereafter dropping into the hopper part 30. When the coolant is supplied to the portion cut by the tool T in a fluid manner, it flows down so as to wash the chips. Besides, when the coolant is supplied in a mist manner, it drops in the state of being adhered to the chips.

The coolant and chips dropped into the hopper part 30 are gathered to the bottom due to the gravitation, dropping into the chip entrance 29a from the bottom opening. In this case, the coolant and the chips smoothly drop into the chip entrance 29a without accumulating on the surface of the base 100 because the front face 1c of the base 100 is formed in the single plane along the Z-axis direction. Accordingly, since a conventional phenomenon which the chips made in high temperature by frictional heat accumulate on and heat the base 100 does not come to occur, the base 100 is restricted from thermal deformation caused by the chips and the machining precision is maintained well.

The coolant arrived to the chip entrance 29a passes through a space of the endless carrying belt 29c, arriving to the bottom of the casing 29d, flowing in the tank 29e. The chips are supported in the state of being put on the endless carrying belt 29c, carried towards the chip exit 29b by displacing the endless carrying belt 29c. The coolant adhered on the chips is divided by the gravitation in a process that the chips are carried by the endless carrying belt 29c, dropping to the bottom of the casing 29d, flowing into the tank 29e. The coolant stored in the tank 29e is used again, and the chips discharged from the chip exit 29b are contained in a receptacle arranged under it.

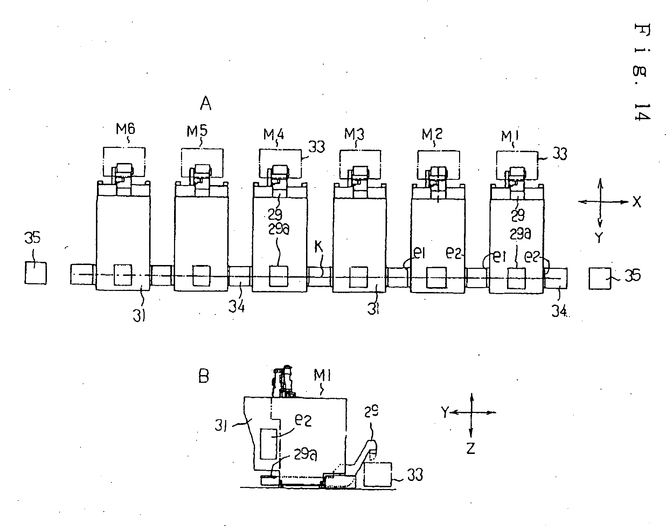

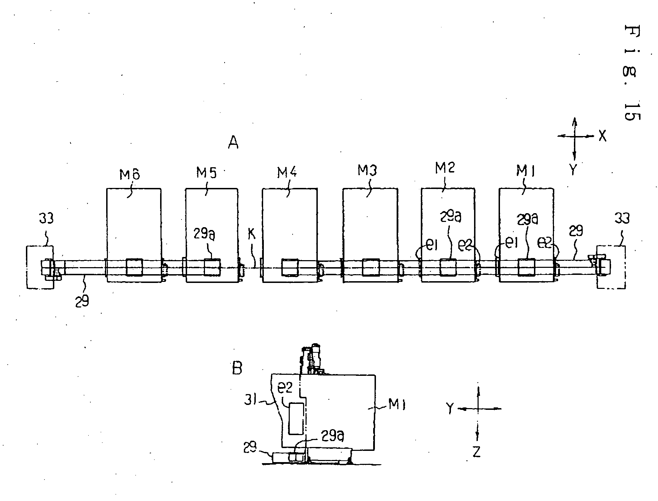

Another use example about the vertical machining center will be explained. Fig. 14 and Fig. 15 respectively show a state that six vertical machining centers are arranged in a row. Fig.14A and Fig.15A are plane views, and Fig.14B and Fig.15B are side views, respectively. Besides, a part of the side view of Fig. 15 is omitted.

In Fig.14, the vertical machining centers M1 to M6 are arranged so as to make the Y-axis direction orthogonal to a machining line k, and an independent chip conveyer 29 for carrying the chips produced by the vertical machining centers M1 to M6 along the Y-axis direction is provided. The chips are carried out rearward the base 100 by the chip conveyers 29 corresponding to the independent vertical machining centers M1 to M6 to be gathered in a receptacle 33. On the machining line k, a power transportation device 34 for carrying the work w along the X-axis direction and the Z-axis direction is provided. The numeral e1 and e2 are power switching openings provided to the side plane walls 31a, 31b, and 35 is a temporary table for work.

On the other hand, in Fig.15, four vertical machining centers M1 to M4 are provided with a common single chip conveyer 29 for carrying the chips produced by the machining centers M1 to M4 in the X-axis direction, and another two machining centers M5, M6 are provided with a common other single chip conveyer 29 for carrying the chips produced by the machining centers M5, M6 in the X-axis direction. In this case, the chips produced by the vertical machining centers M1 to M6 drop into their correspondent chip entrances 29a, carried out by the correspondent chip conveyers 29, gathered in the receptacle 33. Other component members do not change with those shown in Fig. 14.

In Fig. 14 and Fig. 15, the power transportation device 34 arranges the works w on the work supporting members of the jigs 28 of the vertical machining centers M1 to M6 in order by forwardly carrying the work w on the machining line k in the X-axis direction. Accordingly, each of the works w is intermittently carried to the left side of the figure on the machining line, automatically machined by six vertical machining centers M1 to M6 in order.

The embodiments of second invention and the third invention will be explained below.

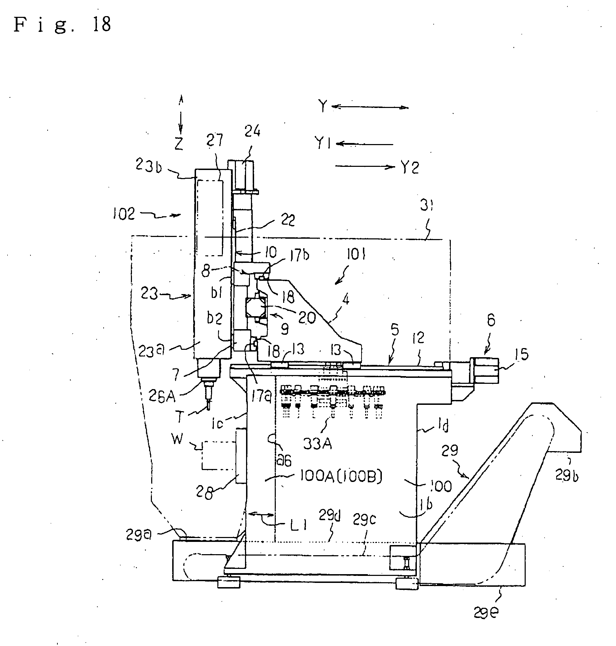

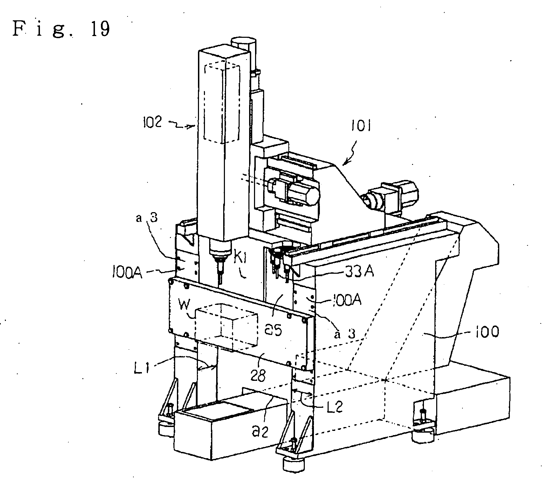

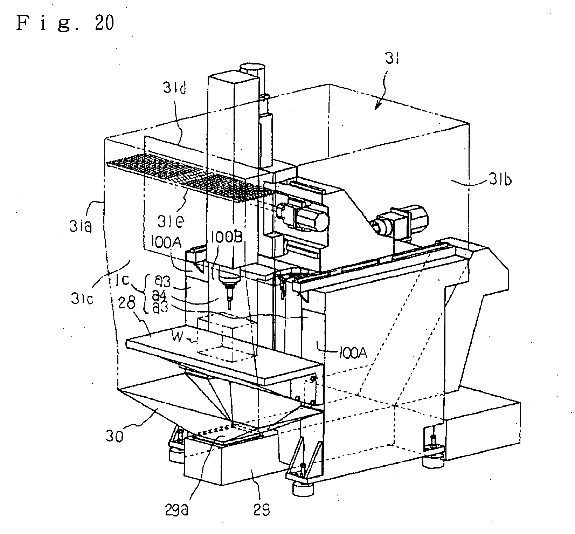

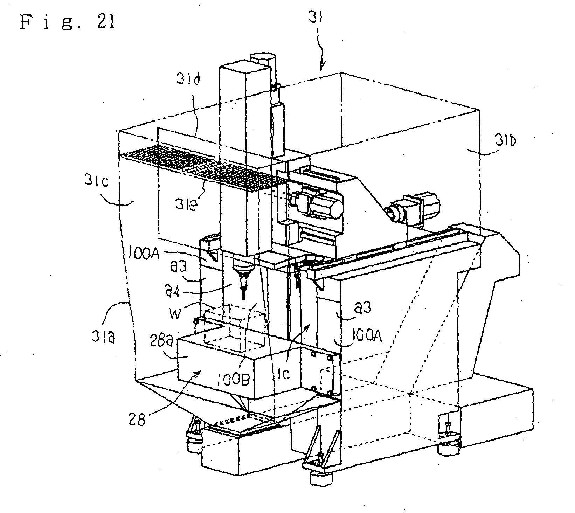

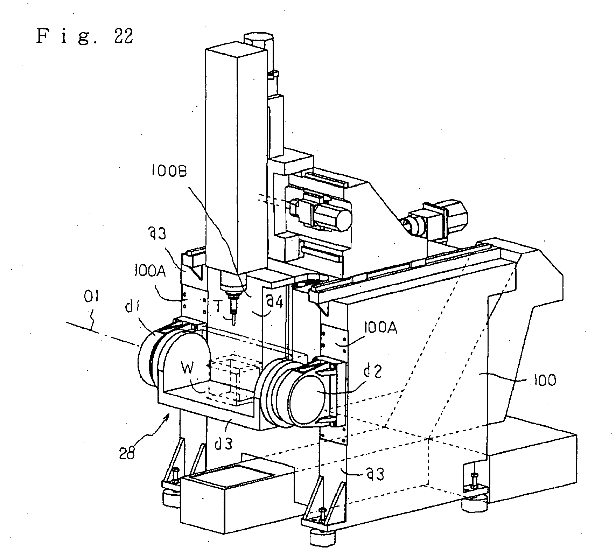

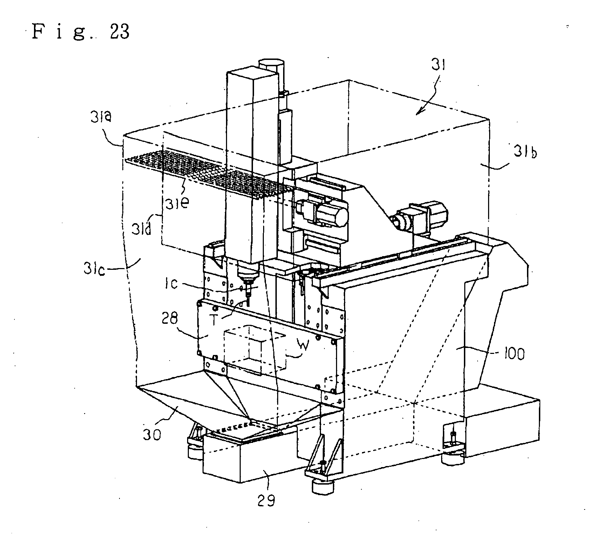

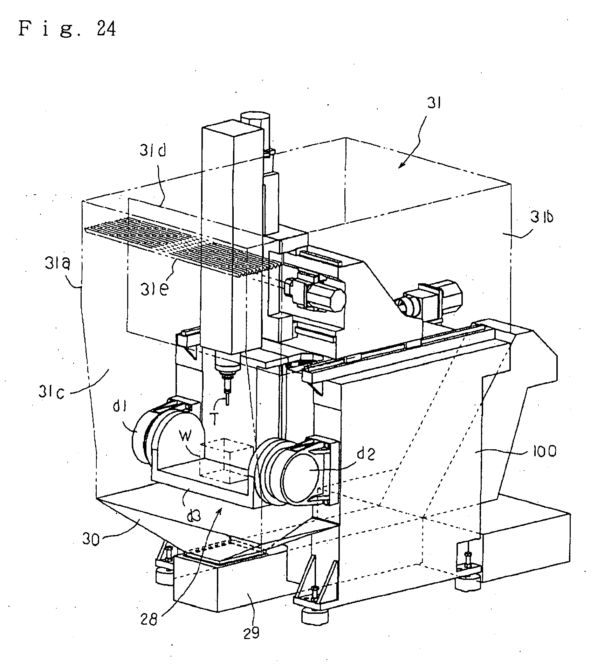

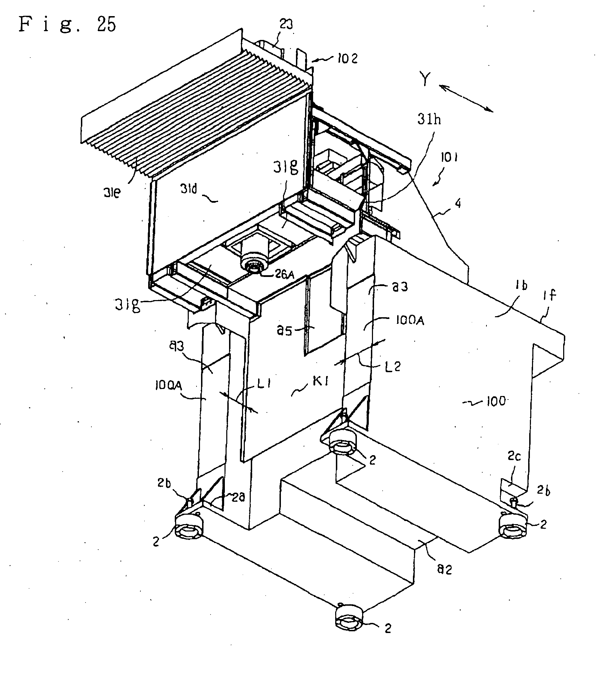

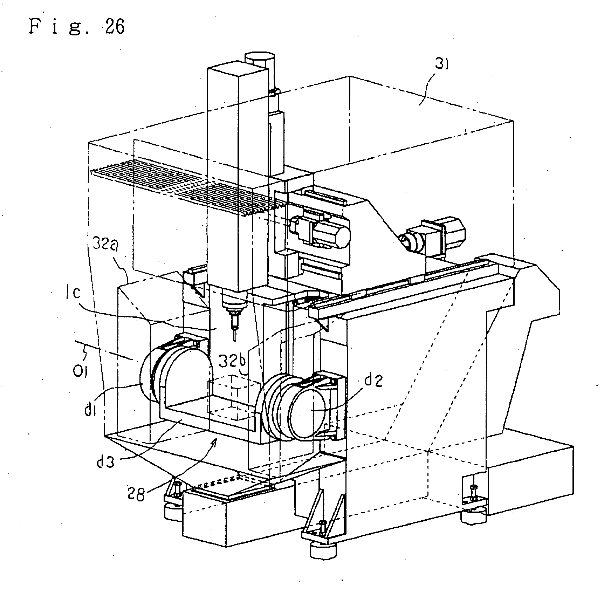

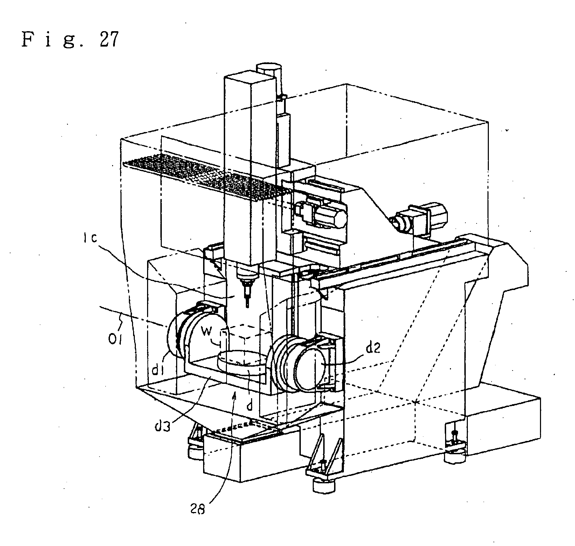

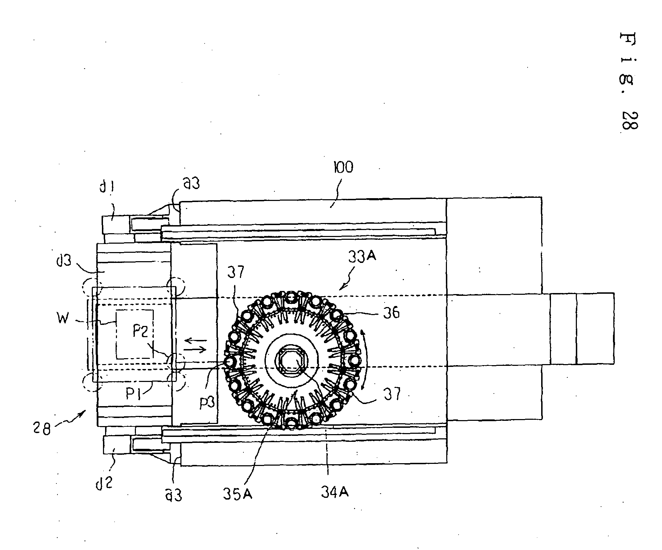

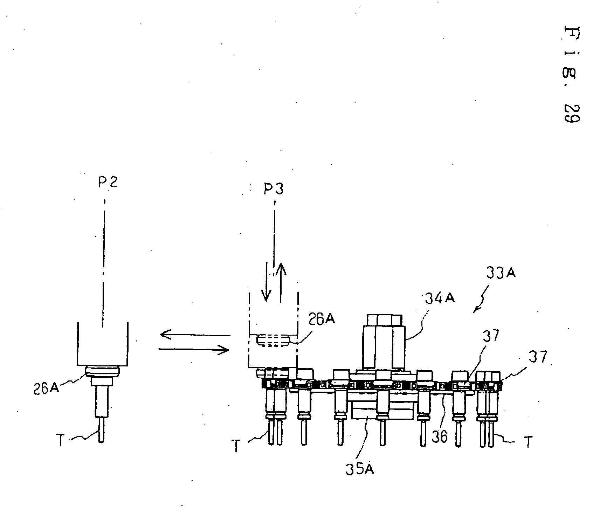

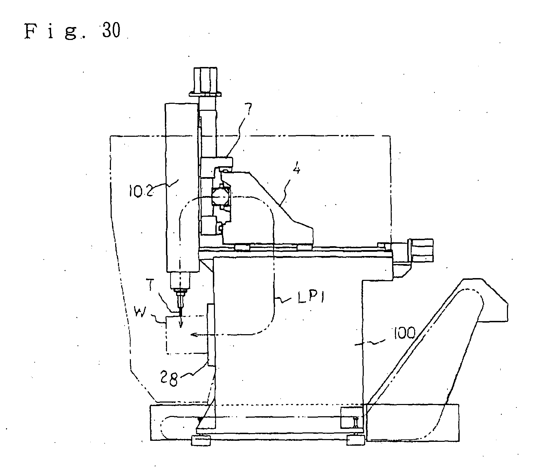

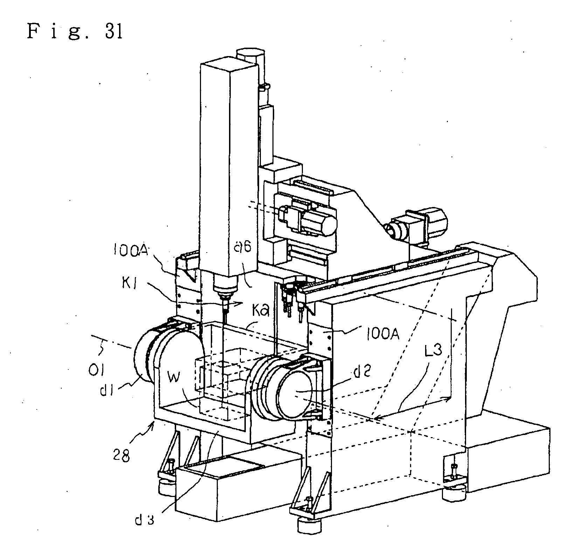

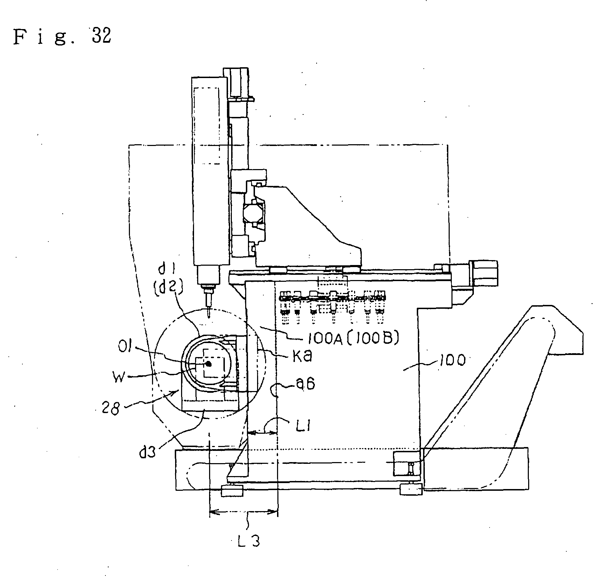

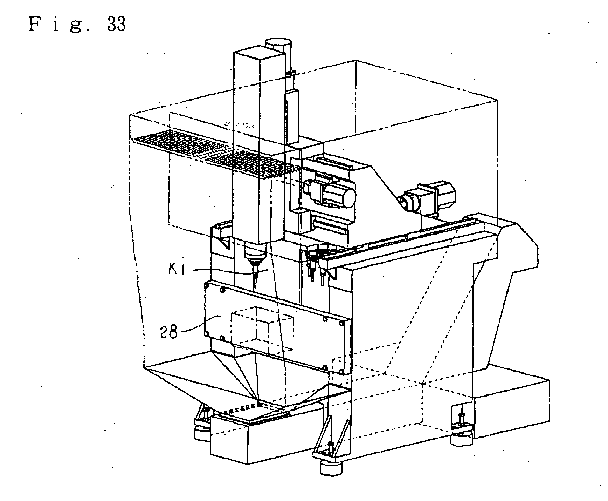

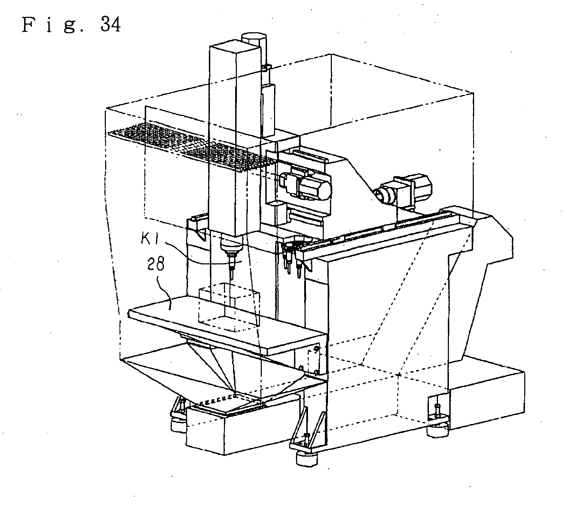

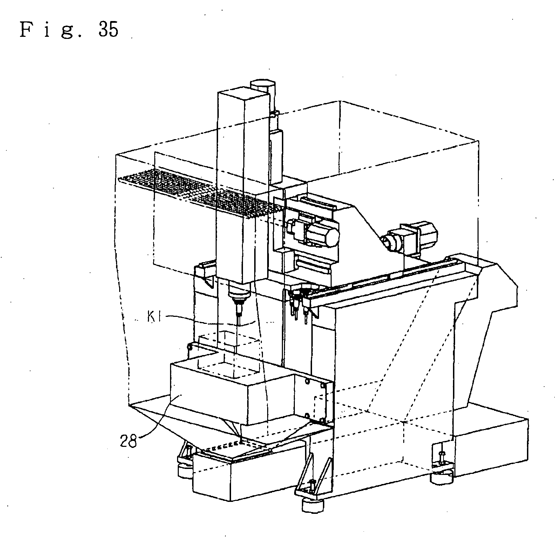

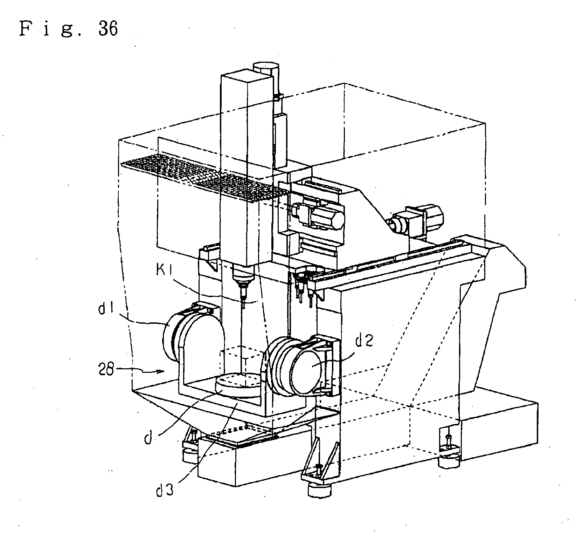

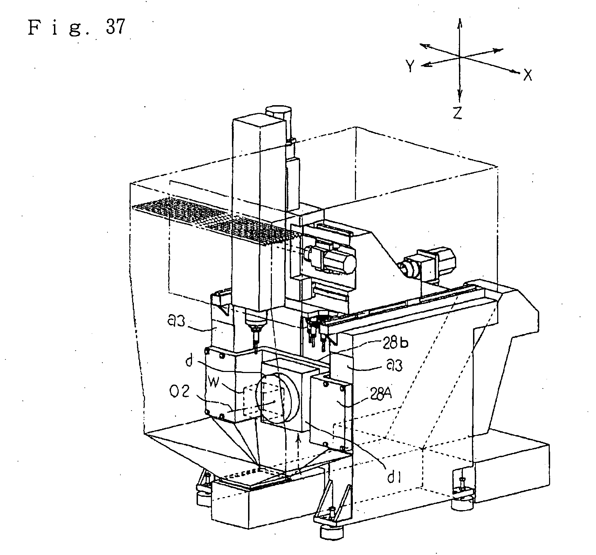

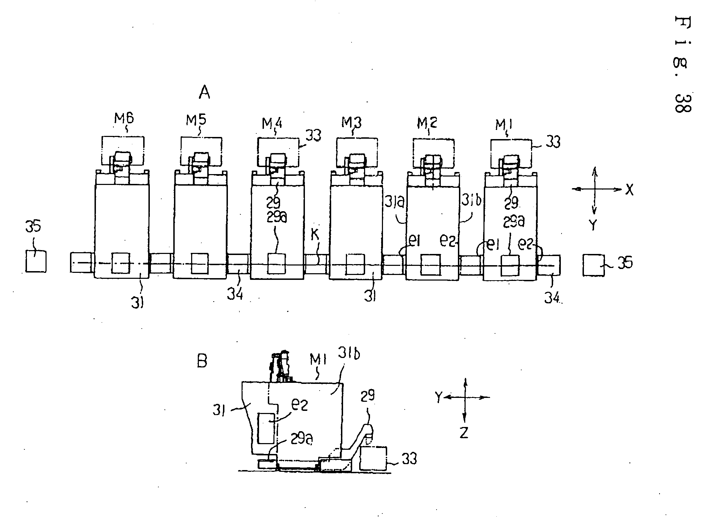

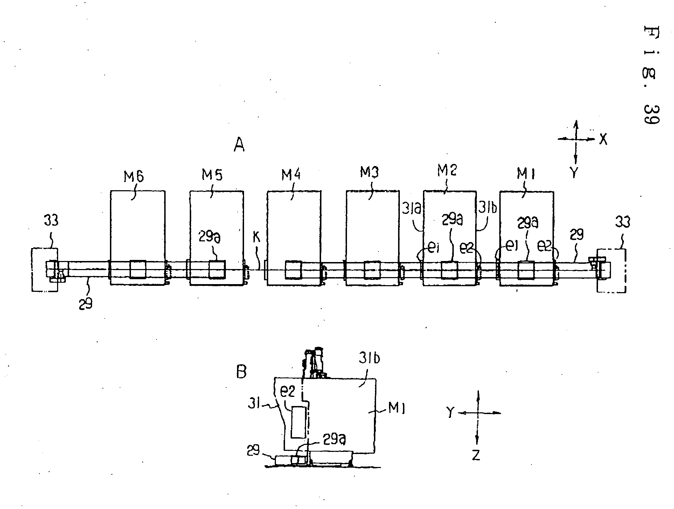

Fig. 19 to Fig.39 show a vertical machining center as a machine tool related to the second invention and the third invention. Fig.17 is a partially schematic perspective view of the vertical machining center of the first example, Fig. 18 is a side view of the vertical machining center, and Fig. 19 is a perspective view showing the state that the lateral intermediate front part of the base is removed from the vertical machining center in Fig. 17. Fig.20 is a perspective view of the vertical machining center wherein the jig shown in Fig. 17 is modified, Fig.21 is a perspective view of the vertical machining center wherein the jig of Fig. 17 is modified, Fig.22 is a perspective view of the vertical machining center wherein the jig of Fig. 17 is modified, and Fig.23 is a perspective view showing the state that a hopper part is provided to the vertical machining center of Fig. 17. Fig.24 is a perspective view showing the state that a circumference cover is provided to the vertical machining center of Fig.22, Fig.25 is a view wherein the vertical machining center is viewed from a diagonal bottom in the state that the jig is abbreviated, and Fig.26 is a perspective view showing the state that an inside cover is provided to the vertical machining center of Fig.24. Fig.27 is a perspective view showing the state that a table is provided to the jig of the vertical machining center of Fig.26, Fig.28 is an explanatory view of a tool changer and so on of the vertical machining center as viewed from right above, Fig.29 is an explanatory view showing the operation of the tool changer as viewed from a side, and Fig.30 is an explanatory view showing the state that the force of the vertical machining center during machining the work is transmitted. Fig.31 is a perspective view of the state that the longitudinal intermediate front part of the base of the vertical machining center of Fig.22 is removed, Fig.32 is a side view of the vertical machining center of Fig.31. Fig.33 is a perspective view of the state that the longitudinal intermediate front part of the base of the vertical machining center of Fig.23 is removed. Fig.34 is a perspective view of the state that the longitudinal intermediate front part of the base of the vertical machining center of Fig.20 is removed. Fig.35 is a perspective view of the state that the longitudinal intermediate front part of the base of the vertical machining center of Fig.21 is removed. Fig.36 is a perspective view of the state that the longitudinal intermediate front part of the base of the vertical machining center of Fig.27 is removed. Fig.37 is a perspective view of a vertical machining center wherein the jig in Fig.33 is modified. Fig.38 show a state that six vertical machining centers are displayed aside, Fig.38A is a plane view and Fig.38B is a side view. Fig.39 show another state that six vertical machining centers are displayed aside, Fig.39A is a plane view and Fig.39B is a partially schematic side view.

As shown in Fig. 17 to Fig. 19, the vertical machining center of the inventions comprises the base 100, the guide driving means 101 and the machining head 102.
The base 100 is fixedly arranged on the floor and the whole shape is formed in a rough rectangular in which a lateral (an X-axial) length is approximately 1.4m - 2.8m, a longitudinal (a Y-axial) length is approximately 2m - 4m, and a vertical (a Z-axial) length is approximately 1m - 3m. Each of the right and left side faces 1a, 1b is formed in a single plane orthogonal to a lateral direction, and the greater part of each of the front face 1c and the rear face 1d is formed in a single plane orthogonal to the longitudinal direction.

A bed part a1 is the lower part of the base 100, and is faced on the floor. The supporting members 2 adjustable in the height are provided near four corners of the bottom 1e of the bed 1a. Each of the forward right and left support members 2, 2 has an added extending part 2a, which extends in the forward Y1, to each of the right and left ends of the bottom part of the front face of the bed part a1, arranged so as not to extend outward from each of the right and left side faces 1a, 1b of the base 100. In this case, the support member 2 is fitted to the bottom of the vertical screw member 2b so as to support it by screwing a vertical screw member 2b in the added extending part 2a. Each of the rearward right and left support members 2, 2 has a concave part 2c formed in a C letter shape as viewed from the side to each of the right and left ends of the bottom of the rear face of the bed a1, arranged so as not to extend outward from each of the right and left side faces 1a, 1b of the base 100 as well as to the rearward Y2 from the rear face 1d of the base 100. In this case, the support member 2 is fitted to the bottom of the vertical screw member 2b so as to support it by screwing the vertical screw member 2b in the bottom part 2d of the concave part 2c.

The front part of the base 100 comprises a pair of right and left lateral end front parts 100A, 100A of the base and a lateral intermediate front part 100B of the base. Each of the lateral end front parts 100A includes a vertical overall length (or a vertical rough overall length) of the right and left end parts of the front face 1c. A longitudinal length L1 is made approximately 200mm - 300mm, and a lateral length L2 is made than approximately 100mm (preferably approximately 200mm - 300mm). The lateral intermediate front part 100B is formed in the front part of the base 100 between the lateral end front parts 100A, 100A, and the front face 1c arranged between the front parts of the front end faces a3, a3 of the lateral end front parts 100A, 100A is formed in the front end face a4.

Making the longitudinal length L1 approximately 200mm - 300mm and the lateral length L2 than approximately 100mm is enough to maintain the rigidity of the base 100 (specially, circumference of the lateral end front parts 100A, 100A of the base) against the external force acting thereon while the vertical machining center machines the work. Even if the external force is made larger, it is possible to maintain enough rigidity of the base 100 due to making the lateral length L2 approximately 200mm - 300mm.

The lateral intermediate front part 100B is formed to be removable to the base 100 except itself. In case the lateral intermediate front part 100B is installed, it is fixedly fastened to the base 100 except itself, the right and left side faces are closely attached on the inner side faces of the lateral end front parts 100A, 100A, and the rear face is closely attached on the base 100 except itself. In case of removing, for example, the lateral intermediate front part 100B can be upwardly removed by a crane in the state that the machining head 102 is displaced to the rearward Y2.

A concave groove a2 is formed to the bottom face 1e of the base so as to extending in the Y-axis direction. A space a5 that a part of the top face 1f of the base is opened is formed to the upper place of the bed part a1 inside the base 100.

The guide-driving means 101 comprises the first saddle 4, the first guide part 5, the first drive part 6, the second saddle 7, the second guide part 8, the second drive part 9, the third guide part 10 and the third drive part.
Concretely explaining, the first saddle 4 is formed in a block shaped in a trapezoid as viewed from the side, arranged on the top face 1f of the base, wherein the bottom face is formed horizontal, the front face is formed in a place orthogonal to the Y-axis direction, the vertical intermediate position of the front face is formed in a concave shape as viewed from the side, and the right and left sides are formed in a triangle shape as view from the side.

The first guide part 5 comprises the pair of guide rails 12 provided to right and left sides of the top face If of the base in a fixed manner and the guide blocks 13 provided to the front and back positions of the right and left sides of the bottom face of the first saddle 4. Here, the guide rails 12 are straight along the Y-axis direction, and the guide blocks 13 are slidably and displaceably fitted on a guide rail 12.

The first drive part 6 comprises the first screw shaft 14, the first servo motor 15 for rotatably driving the first screw shaft 14, and the nut body 16 in which the first screw shaft 14 is screwed. The first screw shaft 14 is positioned at the center of the X-axis direction between the top face If of the base 100 and the bottom face of the first saddle 4 along the Y-axis-direction and rotatably held at the specified position of the top face If through a bearing. The nut body 16 is fixed on the bottom face of the first saddle 4. The servo motor 15 is rotated by order from a not-illustrated numerically controlled control device (NC control device), thereby moving the first saddle 4 in the Y-axis direction on the base 100.

The second saddle 7 is formed in the vertical block shaped in a rough rectangular, disposed nearly to the front face of the first saddle 4, comprising the top part, the bottom part and the central part connecting these. The right and left ends of the top part and the bottom part are extended from the central part to the right and left sides a little, and the top part is extended rearward than the central part and the bottom part.

The second guide part 8 comprises the lower guide rail 17a, the upper guide rail 17b and a pair of right and left guide blocks 18. The lower guide rail 17a is formed straight in the X-axis direction, fixedly provided to the lower portion of the front face 4c of the first saddle 4. The upper guide rail 17b is formed straight in the X-axis direction, fixedly provided to the front part of the top face 4b of the first saddle 4. The guide blocks 18 are slidably fitted to the guide rails 17a, 17b, respectively.

The second drive part 9 comprises the second screw shaft 19, the second servo motor 20 for rotatably driving the second screw shat 19 and a nut body in which the second screw shaft 19 is screwed. The second screw shaft 19 is positioned at the center of the Z-axis direction between the front face 4c of the first saddle 4 and the rear face of second saddle 7 along the X-axis direction, rotatably held at the specific position of the front face 4c of the first saddle 4 through the bearing. The nut body is fixed on the rear face of the second saddle 7. The second servo motor 20 is rotated by an order from the not-illustrated NC control device, thereby moving the second saddle 7 to the X-axis direction on the front face of the first saddle 4.

The third guide part 10 comprises a pair of guide rails 22 and guide blocks b1, b2. The guide rails 22 are formed straight in the Z-axis direction, fixedly provided to the right and left sides of the rear face of the head main body 23 comprising the upper head main body 23b and the lower head main body 23a. The guide blocks b1, b2 are fixedly provided to the upper and lower positions of right and left sides of the front face of the second saddle 7, slidably fitted in the corresponding guide rail, respectively.

The third drive part 11 comprises the not-illustrated third screw shaft, the third servo motor 24 for rotatably driving the third screw shaft, and the not-illustrated nut body in which the third screw shaft is screwed. The third screw shaft is positioned at the center of the X-axis direction between the front face of the second saddle 7 and the rear face of the upper head main body part 23b along the Z-axis direction, rotatably held at the specific position of the front face of the second saddle 7 through the bearing. The nut body is fixed on the rear face of the upper head main body 23b. The third servo motor 24 is rotated by an order from the not-illustrated NC control device, thereby displacing the machining head 102 to the Z-axis direction on the front face of the second saddle 7.

The machining head 102 comprises the head main body 23, the vertically rotating shaft 26A and the spindle motor 27 for rotating the driving shaft 26A. The driving shaft 26A is only rotatably supported by the head main body 23 through the bearing, fixedly having the tool T to the lower end. The spindle motor 27 is fixed to the upper head main body 23b.

In the above-mentioned configuration, the jig 28 is provided to the front face 1c of the base 100 to support the work w fixedly. The jig 28 is formed in a plane board so as to fixedly support the work w through a screw member and so on. A means for optionally changing the height of the jig 28 on the central position of the X-axis direction of the base 100 at plural places is formed. Concretely, many screw holes c1 are arranged in a row in the Z-axis direction on the front face 1e of the base 100, and the height of the jig 28 is changed correspondingly to the screw holes cl, c10 due to changing the screw holes c1, c10 in which screw members c2 for fixing the jig 28 are screwed. The jig 28 can be formed in a hook-shaped board as shown in Fig.20 or the main part 28a can be formed in a thick block in a rectangular manner as shown in Fig21.

In this case, to fix the jig 28, it is expected that a not-illustrated comparative thin board member is provided between the jig 28 and the front face 1c of the base 100 in a protruded manner and the convex-shaped or concave-shaped guide rail is provided to guide the jig 28 in the Z-axis direction. Different convex-shaped parts or concave-shaped parts whose longitudinal dimensions are comparatively small are sometimes formed to the front face 1c necessarily. The convex-shaped parts or the concave-shaped parts do not deviate from the configuration of the invention, which the front face 1c is formed in a single plane.

The jig 28 can be formed in a configuration for supporting the work supporting member so as to displace it in an optional direction through the NC control device. For example, as shown in Fig.22, it is expected that a tilt-table comprising the bearing part d1 including a servo motor and the simple bearing d2 are fixedly provided to the right and left portions of the front face 1c of the base 100 in the state of being extended to the forward Y1, the work supporting part5 d3 is provided between the bearings d1, d2 through the rotate-supporting shaft of the X-axis direction rotatably around a right and left lateral line O1, the position around the right and left lateral line is changed by an order from the NC control devices. Instead of this, it is possible that the work w fixed on the work supporting part d3 has the right and left inclinations changed due to an order from the NC control device, or is changed around the specific axis of the Z-axis direction due to an order from the NC control device. These jigs 28 can be optionally formed so as to change and adjust their heights, if necessarily. For example, it is expected that a structure for displacing the jig 28 to parallel move in the Z-axis direction on the specific line is formed in response to the operation of the driving device such as a servo motor and a cylinder due to an oil pressure. Besides, the work w fixed on the work supporting member d3 may be displaced to the specific direction by hand operation.

Although the jig shown in any of Fig. 17 to Fig.22 is fixed on the front parts a3, a3 of the lateral end front parts of the base, it can be fixed on the front part a4 of the lateral intermediate part 100B of the base or the front parts a3, a4 of both parts.

The chip conveyer 29 for carrying chips to a specific place is provided under the base 100. The chips are produced when the work w fixed on the jig 28 is cut. The chip conveyer 29 comprises the chip entrance 29a and the chip exit 29b. The chip entrance 29a is arranged right under the jig 28 and the chip exit 29b is arranged at a place suitable for carrying out the chips. The direction that the chip conveyer 29 carries out the chips is suitably decided in response to the on-site situation, sometimes turned to the Y-axis direction as illustrated or the X-axis direction. The chip conveyer 29 is provided with an endless carrying belt 29c that moves the chips in the state of putting on the top face. Circumference of the endless carrying belt 29c is fluid-tightly surrounded by a casing 29d. The inside of the casing 29d is used as a passage for coolant, and a tank 29e for storing the coolant is formed to a longitudinal position of the casing 29d.

In the vertical machining center shown in Fig.17 to Fig.22, generally as shown in Fig.20, Fig.21, Fig.23 and Fig.24, the hopper part 30 is formed to the front face 1c of the base 100 below the jig 28. The hopper part 30 receives chips and coolant to drop them into the chip entrance 29a through the bottom opening. The chips are produced when the work w fixed on the jig 28 is cut, and the coolant is fed into a cut portion of the work w that is cut with the tool T. The circumferential cover 31 is provided to surround the front space of the base 100 above the hopper part 30 and the upper space of the base 100. The circumferential cover 31 shown in Fig.20, Fig.21, Fig.23 or Fig.24 comprises the right and left side plane walls 31a, 31b, the front plane wall 31c, the X-axially vertical plane wall 31d fixed on the machining head 102, and the accordion-shaped horizontal wall 31e connecting the lower end edge of the vertical plane wall 31d and the upper inside of the front plane wall 31c. Here, the accordion-shaped horizontal wall 31e is extensively deformed along the Y-axis direction. In this case, the right and left end edges of the horizontal wall 31e are in close contact with the insides of the right and left side plane walls 31a, 31b, respectively. The switching ports for carrying the work w into or out of the circumferential cover 31 are formed to the front plane wall 31c and the right and left side plane walls 31a, 31b, if necessarily. Besides, as shown in Fig.25, sliding walls 31g, 31g are formed to the right and left sides of the bottom of the head main body 23 between the lower end edge of the vertical plane wall 31d and the frond upper edge of the base 100 so as to be displaced in relation to the X-axial displacement of the head main body 23. Even if the head main body 23 is displaced to an optional position in the X-axis direction, the sliding walls 31g, 31g are formed so as to prevent the chips and the coolant from outwardly splashing between the lower end edge of the vertical plane wall 31d and the front upper edge of the base 100. The sliding walls 31g are formed so as not to extend to the outward of the right and left side plane walls 1a, 1b of the base 100 even if the head main body 23 is displaced to the X-axis direction greatly. Concretely, a technique disclosed in Japanese patent No. 3168328 is used. When the sliding walls 31g are greatly pushed in the X-axis direction by the head main body 23, they change their posture to a rising manner near the right and left side plane walls 1a, 1b of the base 100 due to the guiding action of the guide rail 31h.

In case of the vertical machining center of Fig.24, as shown in Fig.26, it is preferable that inside covers 32a, 32b for surrounding the circumference of the bearings d1, d2 are provided in the circumferential cover 31, if necessary. The inside covers 32a, 32b contribute effectually towards preventing the chips from being entered into the relative sliding faces of the bearings d1, d2 and the coolant from splashing and attaching to the circumference of the bearings d1, d2. Occasionally, the jig 28 is so formed that a table d rotated around a vertically directional line is provided on the work supporting part d3 shown in Fig.24, as shown in Fig.27. A suitable inside cover for surrounding the drive part of the table d is provided into the circumferential cover 31 so as to fluid-tightly intercept the work machining area and the space for a device for driving the table d. In this case also, the coolant and the chips are not sprinkled on the device for driving the table d.

An automatic tool exchanger 33A is provided in a space a5 inside the base 100. Although the tool exchanger 33A can be variously formed, one of the present invention is made as follows. That is, as shown in Fig.28 and Fig.29, a claw part 37 for holding the tool T is arranged on a disk 36 that is supported in the base 100 through a drive part 35A with a servo motor 34A, and calculation for the tool T is performed through the servo motor 34A and reduction gears. A passage a7 is formed to the front of the base 100 including the lateral intermediate front part 100B to displace the vertical rotation driving shaft 26A of the machining head 102 and the clamped tool T in exchanging the tool.

The tool T is exchanged as follows. That is, the vertical rotation driving shaft 26A arranged at a machining area P1 is moved to a tool exchange-starting position P2, continuously moved to a tool exchange position P3, and then the tool T installed on the vertical rotation driving shaft 26A is undamped in a state that the tool T is held by the claw part 37 arranged at the tool exchange position P3. Thereafter, the vertical rotation driving shaft 26A is raised, the disk 36 holding the tool T is rotated, and then the installed tool T is calculated at the tool exchange position P3. Then, the vertical rotation driving shaft 26A is taken down to clamp the tool T arranged at the tool exchange position P3, and thereafter moved to a tool exchange finishing position where is the same position as the tool exchange starting position P2 to prepare for the next machining order. In case of this tool exchanger 33A, since a place to install the tool exchanger 33A in is unnecessary except a place to install the base 100 in, a space for the machine may be small.

A use example and an operation that the work w is machined by the vertical machining center shown in Fig. 17, Fig. 18, and Fig. 20 to Fig. 29 in a state that the lateral intermediate front part 100B is not removed from the base 100 will be explained below.

An operator carries the work w outside the circumferential cover 31 and fixes it on the work supporting part d3 of the jig 28. After machining the work w, the operator removes the work w from the jig 28 and carries it outward the circumferential cover 31. In this case, since the front face 1c of the base 100 is formed in a single plane and the jig 28 is provided to a vertical intermediate position of the single plane, in case of the jig 28 shown in Fig. 17 to Fig.21, there are no component members of the vertical machining center on the front side and the right and left sides of the jig 28 inside the circumferential cover 31. Besides, in case of the jig 28 shown in Fig.22, there are no component members of the vertical machining center except the drive part and the bearing part on the front side and the right and left sides of the jig 28 inside the circumferential cover 31. Therefore, the work w is comparatively easily transmitted from the outside of the circumferential cover 31 on the jig 28 by moving from the front side of the jig 28 to the Y-axis direction through the switching entrance of the front plane wall 31c, or by moving from the right and left sides of the jig 28 to the X-axis direction through the switching entrances of the right and left side plane walls 31a, 31b. Besides, the work w is comparatively easily transmitted outside the circumferential cover 31 by moving from the jig 28 to the Y-axis direction through the switching entrance of the front plane wall 31c, or by moving to the X-axis direction through the switching entrances of the right and left side plane walls 31a, 31b. Moreover, in each of examples of Fig.17 to Fig.22, such a configuration as the front face 1c of the base 100. is formed in a single plane and the jig 28 is provided to the vertical intermediate position of the single plane contributes effectually towards making the X-axial length of the work w fixed on the jig 28 comparatively large.

When changing a machining area due to the tool T is required because of changing the size of the work w, the height of the jig 28 is changed by changing the screw hole c1 in which the screw member c2 for fixing the jig 28 is screwed. In this case, when the height of the jig 28 from the floor is diminished, the vertical distance from the jig 28 to the tool T of the machining head at the initial position is increased, and therefore, the machining area is increased. Conversely, when enlarging the height of the jig 28, the vertical distance from the jig 28 to the tool T of the machining head at the initial position is decreased; and therefore, the machining area is decreased.

In machining the work w fixed on the jig 28, a not-illustrated NC control device is started on an operation. That is, the NC control device operates the first servo motor 15, the second servo motor, and the third servo motor 24 to suitably move the machining head 102 in the Y-axis direction, the X-axis direction and the Z-axis direction as well as a spindle motor 27 to rotate the vertical rotational driving shaft 26A and the tool T installed thereon according to a previous input program, and besides, if necessary, the work supporting part d3 and the work fixed thereon are rotated around the lateral line O1 by rotating the servo motor of the bearing part d1 of the jig 28 shown in Fig.22. Besides, if necessary, the tool exchanger 33A is operated to exchange the tool T of the machining head 102, or a not-illustrated coolant supply means is suitably operated to supply coolant.

The work w is machined in a predetermined shape by the tool T through the NC control device. During machining, a force effecting on the tool T is transmitted through the machining head 102, the second saddle 7, the first saddle 4, the base 100, the jig 28 and the work w so as to draw a loop-line LP1, as shown in Fig.30.

While machining the work w due to the machining head 102, coolant is supplied from a not-illustrated coolant supply means to cut the work w smoothly and cool the cut place, and chips are produced because the tool T cuts the work w. Such coolant and chips drop due to the gravitation as being splashed to the circumference by rotation of the tool T. The splashed coolant and chips are prevented from splashing outward by the circumferential cover 31 (the front plane wall 31c, the right and left side plane walls 31a, 31b, the accordion horizontal plane wall 31e and so on) and the base 100 and so on, thereafter dropping into the hopper part 30. When the coolant is supplied to the portion cut by the tool T in the fluid manner, it flows down so as to wash the chips. Besides, when the coolant is supplied in a mist manner, it drops in a state of adhering to the chips.

The coolant and chips dropped into the hopper part 30 are gathered to the bottom of the hopper part 30 due to the gravitation, dropping into the chip entrance 29a of the chip conveyer 29 from the bottom opening. In this case, the coolant and the chips smoothly drop into the chip entrance 29a without accumulating on the surface of the base 100 because the front face 1c of the base 100 is formed in the single plane along the Z-axis direction. Accordingly, there is not occurred a conventional phenomenon that the chips made in high temperature by frictional heat accumulate on the base 100 and heat it, and therefore, the base 100 is prevented from thermal deformation due to the chips. Accordingly, the machining precision is maintained well.

The coolant arrived to the chip entrance 29a passes through a space of the endless carrying belt 29c, arriving at the bottom of the casing 29d, flowing in the tank 29e. The chips are supported in a state of being mounted on the endless carrying belt 29c, carried towards the chip exit 29b due to movement of the endless carrying belt 29c. The coolant adhered on the chips is divided by the gravitation in the process when the chips are carried by the endless carrying belt 29c, dropping to the bottom of the casing 29d, flowing into the tank 29e. The coolant stored in the tank 29e is used again, and the chips discharged from the chip exit 29b are contained in a receptacle arranged under it.

In using the jig 28 as shown in Fig.26 and Fig.27, even though intending to rotate the work supporting part d3 and the work w fixed thereon around the lateral line 01, it is occasionally not possible to rotate them because the distance from the line 01 to the front face 1c of the base 100 is insufficient.

In this case, the machining head 102 is gone back to the rearward Y2 by the guide driving means 101 to shift rearward from right above the lateral intermediate front part 100B of the base. In the state, a bolt combining the lateral intermediate front part 100B to the base main body is removed from the base 100 part (the base main body) that does not include the lateral intermediate front part 100B, and the lateral intermediate front part 100B is removed from the base main body by an overhead crane.

After the lateral intermediate front part 100B is removed from the base 100, as shown in Fig.31 and Fig.32, a portion between the pair of the right and left lateral end front parts 100A, 100A is formed in a rectangular parallelepiped space k1. Accordingly, the distance L3 between the lateral line (rotary center of the work supporting part d3) O1 and the front end face a6 of the base 100 part forming the space between the pair of the right and left lateral end front parts 100A, 100A is increased by the longitudinal length L1 of the lateral end front parts 100A, 100A (the longitudinal length of the lateral intermediate front part 100B of the base). Accordingly, the maximum radius around the lateral line O1 is increased by the longitudinal length L1 of the lateral end front part 100A of the base when the lateral intermediate front part 100B is removed. The jig 28 and the work w fixed thereon rotate around the lateral line O1 through a virtual position ka as long as the radius is within the range of the increased maximum radius, and therefore, the size of the work w is increased.

The vertical machining center in a state that the lateral intermediate front part 100B is removed is used in accordance with the case before it is removed. The use situation is illustrated in for example Fig.33 to Fig.36, whereas an explanation is omitted.

Fig.37 shows a jig 28 that is used in only the vertical machining center in the state that the lateral intermediate front part 100B of the base is removed. The jig 28 is arranged between the pair of right and left lateral front parts 100A, 100A rearward the front part a3. Concretely, a stationary plate 28A shaped in a C letter as viewed from right above wherein the right and left ends are fixed to the whole part a3 forming the front end faces of the lateral end front parts 100A, 100A and a lateral center part 28b is rearward extended and a table d fixed on the front face of the lateral center part 28b to be rotated around an axial line 02 are provided, and the lateral center part 28b and the table d are arranged rearward the front part a3.
The jig 28 contributes effectually towards diminishing the forward extension of the work w from the front part a3 in spite of the table d.

In machining by the vertical machining center in the state that the lateral intermediate front part 100B of the base is removed as shown in Fig.33 to Fig.37, as shown in Fig.30, the force effecting on the tool T is transmitted through the machining head 102, the second saddle 7, the first saddle 4, the base 100, the jig 28 and the work w so as to draw the loop-line LP1. In this case, there is no change in the length of the loop-line LP1 whether the lateral intermediate front part 100B is removed or not. Since the longitudinal length L1 of each of the lateral end front parts 100A, 100A is made approximately 100mm - 300mm and the lateral length L2 is made approximately than 100mm, the whole rigidity of the base 100 and the jig 28 does not fall to such a degree that the machining precision is spoiled due to an external force that is usually effected on the base during machining even if the lateral intermediate front part 100B is removed.

Another example that the vertical machining centers are arranged in plural rows will be explained. Fig.38 and Fig.39 show a situation where six vertical machining centers are arranged in 1a row. Fig.38A and Fig.39A are plane views, and Fig.38B and Fig.39B are side views, respectively. Besides, a part of the side view of Fig.39 is omitted.

In Fig.38, the vertical machining centers M1 to M6 are arranged so as to make the Y-axis direction orthogonal to the machining line k, and the independent chip conveyer 29 for carrying the chips produced by the vertical machining centers M1 to M6 to the Y-axis direction is provided. The chips are carried rearward the base 100 by the chip conveyers 29 corresponding to the independent vertical machining centers M1 to M6 to be gathered in the receptacle 33. On the machining line k, the power transportation device 34 for carrying the work w along the X-axis direction and along the Z-axis direction is provided. The numeral e1 and e2 are power open and close openings provided to the side plane walls 31a, 31b, 35 is a temporary table for work.

On the other hand, in Fig.39, four vertical machining centers M1 to M4 are provided with the common single chip conveyer 29 for carrying the chips produced by the machining centers M1 to M4 in the X-axis direction, and another two machining centers M5, M6 are provided with the common other single chip conveyer 29 for carrying the chips produced by the machining centers M5, M6 in the X-axis direction. In this case, the chips produced by the vertical machining centers M1 to M6 drop into their correspondent chip entrances 29a, carried out by the correspondent chip conveyers 29, gathered in the receptacle 33. Other component members do not change with those shown in Fig.22.

In both of Fig.38 and Fig.39, the power transportation device 34 lets the works w arrange on the work supporting members d3 of the jigs 28 of the vertical machining centers M1 to M6 in order by forwardly carrying to the X-axis direction on the machining line k. Accordingly, each of the works w is intermittently carried to the left side of the figures on the machining line, automatically machined by six vertical machining centers M1 to M6 in order.

The plenty of vertical machining centers M1 to M6 in Fig.38 and Fig.39 are arranged in a row in a state that the right and left side faces are close. In this case, since the supporting members 2 serving as legs of the base 100 are formed so as not to extend from the right and left side faces 1a, 1b of the base 100, they do not interfere with each other. Besides, since the front sides of the pair of right and left supporting members 2, 2 are extended to the forward Y1 from the front face c1 of the base 100, they contribute effectually towards supporting the base 100 stably in comparison with the case that the supporting members do not extend. Moreover, since the rear sides of the supporting members 2, 2 are formed so as not extend to the rearward Y2 from the rear face 1d of the base 100, even if the tank 29e of the chip conveyer 29 is contacted on the rear face 1d, they do not interfere with the tank 29e.

## Claims

1. A machine tool, comprising:
a base fixed on a floor;
a machining head having a vertical rotation driving shaft, said vertical rotation driving shaft having a tool fixed on a bottom part; and
a guide-driving means formed on a top face of the base, displacing the machining head in a longitudinal direction, in a lateral direction or in a vertical direction through guide parts,
wherein a front face of the base is formed in a single plane orthogonal to the longitudinal direction and a jig for fixing a work machined with the tool is installed in a state of being forwardly extended from a vertical intermediate position of the single plane.

2. A machine tool as claimed in claim 1, wherein the jig is so formed that the height can be changed on the single plane.

3. A machine tool as claimed in claim 1 or claim 2, the machining head is vertically displaced in front of the single plane while the tool machines the work, and the work is machined at a lower position than the guide parts of the guide-driving means.

4. A machine tool as claimed in claim 1, claim 2 or claim 3, the top face of the base is raised than about 1.0m - 1.5m from the floor.

5. A machine tool as claimed in any of claims 1 to 4, wherein a concavity groove is formed to a bottom face of the base to arrange a chip conveyer for discharging chips from a front bottom of the base to a rear side of the base.

6. A machine tool as claimed in any of claims 1 to 5, wherein the chip conveyer is installed on the floor, and a chip entrance of the conveyer is arranged under the jig.

7. A machine tool as claimed in any of claims 1 to 6, wherein a table for supportively rotating and displacing the work is provided to the front face of the base to form the jig.

8. A machine tool as claimed in any of claims 1 to 7, wherein a drive device for the jig is surrounded by a cover, so that the inside of the cover is fluid-tightly distinguished from a work machining area of the machining head.

9. A machine tool, comprising:
a base fixed on a floor,
a machining head having a vertical rotation driving shaft, said vertical rotation driving shaft having a tool fixed on a bottom part; and
a guide-driving means formed on a top face of the base, displacing the machining head in a longitudinal direction, in a lateral direction or in a vertical direction through guide parts,
wherein almost the whole front face of the base is formed in a single plane orthogonal to the longitudinal direction, a lateral intermediate front part of the base forming a space between a pair of right and left lateral end front parts of the base including vertical overall length portions or vertical roughly overall length portions at right and left end parts of the front face is formed detachably from the other portions of the base, and a jig for fixing a work machined with the tool is installed in a state of being forwardly extended from a vertical intermediate position of the front face.

10. A machine tool, comprising:
a base fixed on a floor,
a machining head having a vertical rotation driving shaft, said vertical rotation driving shaft having a tool fixed on a bottom part; and
a guide-driving means formed on a top face of the base, displacing the machining head in a longitudinal direction, in a lateral direction or in a vertical direction through guide parts,
wherein almost the whole front face of the base is formed in a single plane orthogonal to the longitudinal direction, and thereafter a lateral intermediate front part of the base forming a space between a pair of right and left lateral end front parts of the base including vertical overall length portions or vertical roughly overall length portions at right and left end parts of the front face is excised, and a jig for fixing a work machined with the tool is installed in a state of being forwardly extended from a vertical intermediate position of the front face.

11. A machine tool as claimed in claim 9 or claim 10, wherein a longitudinal length of lateral end front part is made 100mm - 300mm.

12. A machine tool as claimed in claim 9, claim 10, claim 11, wherein a lateral length of each of right and left sides of end front parts is made than 100mm.

13. A machine tool as claimed in any of claims 9 to 12, wherein the jig is forwardly extended from a front part forming front faces of the pair of right and left lateral end front parts of the base.

14. A machine tool as claimed in any of claims 9 to 13, wherein the jig is forwardly extended from a front face forming a front end face of the lateral intermediate front part of the base.

15. A machine tool as claimed in any of claims 9 to 14, wherein the jig is arranged rearward the front face between the pair of right and left lateral end front parts of the base.
